# EUROPEAN PATENT SPECIFICATION

(11) **EP 3 986 356 B1**
(45) Date of publication and mention of the grant of the patent: **14.05.2025**
(21) Application number: 20739573.2
(22) Date of filing: 19.06.2020
(51) Int. Cl.: A61J 1/03, A61J 7/00, B65D 83/04, G01F 13/00

(54) **DELIVERY DEVICE FOR DRUG PELLETS**
ABGABEVORRICHTUNG FÜR ARZNEIMITTELKÜGELCHEN
DISPOSITIF D'ADMINISTRATION DE MÉDICAMENTS EN PASTILLES

(30) Priority: 19.06.2019 GB 201908810
(43) Date of publication of application: 27.04.2022
(73) Proprietor: Ondosis AB, 431 83 Mölndal (SE)
(72) Inventor: BARONNET, Stéphane René, 412 58 Göteborg (SE); KAREMYR, Magnus, 426 71 Västra Frölunda (SE)
(74) Representative: Dehns
(86) International application number: PCT/EP2020/067249
(87) International publication number: WO 2020/254662

(56) References cited:
- EP-A1- 2 088 404
- WO-A1-01/52923
- WO-A1-2019/115832
- WO-A1-97/08977
- US-A- 5 862 957

## Description

### FIELD OF THE INVENTION

The present disclosure relates generally to delivery devices for drug pellets (e.g., a drug or medicament in pellet form) and various aspects of such devices relating, for example, to the dispensing of pellets from the device, and the operation and mechanics of such devices.

### BACKGROUND

Solid oral dosage form ("ODF") medications can be manufactured in, e.g., a tablet or pellet form. A tablet or pellet could contain different substances where the main ingredient(s) is/are the active pharmaceutical ingredient ("API"). Drug pellets could be administered to patients as prefilled capsules or compressed in a tablet with other materials. Dispensing mechanisms for various types of ODF are known, and can range from blister-pack type devices, wherein individual tablets can be retained within pockets and retained therein by the use of foil, to dispensing bottles. Various more complicated mechanisms are also known, in particular for other types of drug formulation, for example those in the form of pellets, which may typically be less than 10% of a particular dosage per unit.

An advantage of dispensing drugs in pellet form can be that the dose can be varied using the same dispensing device. Another advantage is that pellets are relatively easy to ingest, whereas tablets are sometimes crushed in order that a patient can ingest or swallow them. Crushing or dividing of tablets is often used by patients to get, e.g., half a dose from a prescribed drug, a process which is not recommended. Using pellets can allow for a more exact tuning of the dose than what may be achieved using larger dosage forms such as tablets or capsules. In addition, for modified release formulations, pellets are often more robust against food interactions than larger dosage forms such as tablets.

It is desired to improve the mechanism by which drugs in pellet form are dispensed. It has been recognised that such improvements would benefit many areas, for example: paediatric medicine and prescription; antibiotics for easier swallowing, especially in case of geriatric medicine; chronic medication for easier swallowing; in the case of certain controlled substances such as stimulants for ADHD or pain medications such as opioids; for improved control over the dispensed dose or limit the risk for overdosing; for medications that require titration at initiation or flexible adjustments as a result of disease variability or as a result of achieved outcomes, for example in case of immunosuppression after organ transplant; for psychiatric disorders such as depression; for neurological disorders such as epilepsy.

Methods have been contemplated for the dispensing of pellet-type medicaments, but it has been found that the mechanics of such devices can be tricky to optimise due to the nature of the pellets and their interaction with moving parts of such devices. For example, pellets have been found to shear, bunch or churn within the device, causing issues such as blocking or grinding of the pellets as they are being dispensed.

It is desired, therefore, to improve the mechanics of a device for dispensing this type of oral dosage form, to avoid these and similar issues.

EP 3088404 A1 discloses a metering device for powder or paste-like metering material.

A known dispensing device for pellets is shown in WO 2019/115832 A1.

### SUMMARY OF THE INVENTION

Herewith will be described various aspects and embodiments of a dispensing device that may be used in the present invention, and in relation to any of the aspects and embodiments of the invention described herein insofar as they are suitable therefor.

In accordance with the present invention, there is provided a device for dispensing at least one solid oral dosage form (e.g., a drug or medicament) in pellet form. As described below, a largest dimension (e.g., width or diameter) of the solid oral dosage form (e.g., pellets) may be between about 150 µm and about 1200 µm (or even about 1500 µm), optionally between about 200 µm and about 300 µm, between about 300 µm and about 500 µm, between about 500 µm and about 700 µm. In various embodiments the largest dimension (e.g., width or diameter) of the solid oral dosage form (e.g., pellets) may be between about 700 µm and about 900 µm or between about 800 µm and about 1100 µm.

The device comprises the features as required by claim 1.

The screw pump is located outside of (e.g., displaced from) the tapered portion of the cartridge. The tapered portion is then able to provide a convenient funnel or feeder for pellets into the screw pump, whilst the displacement avoids undesired interaction between the screw pump and the funnel, including any harsh interface for pellets. This provides an easier and more efficient feeding of pellets into the screw pump. A harsh interface may otherwise be formed by the interaction of the screw pump with the tapered portion if it were not displaced therefrom. The displacement may be in the direction of the outlet of the screw pump.

There is no portion of the screw pump located at, within or adjacent to the tapered portion, in particular any edges formed by the interior surface(s) of the cartridge at the tapered portion. Displacing the screw pump from such edges avoids shearing of the pellets at this location that might otherwise occur.

The cartridge comprises an exit tube extending from the tapered portion of the cartridge. The exit tube contains the screw pump, wherein the screw pump may be displaced from a confluence of the tapered portion and the exit tube.

The tapered portion may extend a distance (d) in a first direction, wherein the screw pump may be displaced from the confluence of the tapered portion and the exit tube in the first direction by at least 50% of the distance. The first direction may correspond to an axial direction of the rotating member. This provides a large gap between the tapered portion and the screw pump, which reduces the chances of pellet damage (e.g., shearing) further.

An internal wall of the cartridge forms at least the tapered portion, and tapers from a first diameter (D1) to a second diameter (D2), wherein the first diameter (D1) is larger than the second diameter (D2). The internal wall may have the first diameter (D1) in a portion of the cartridge above the tapered portion, and the internal wall may taper from the first diameter (D1) to the second diameter (D2) as it extends through the tapered portion.

The rotating member may taper from a first diameter (d1) to a second diameter (d2) as it extends through the tapered portion of the cartridge, wherein the first diameter (d1) is larger than the second diameter (d2). The rotating member may have the first diameter (d1) in a portion of the cartridge above the tapered portion, and the rotating member may taper from the first diameter (d1) to the second diameter (d2) as it extends through the tapered portion of the cartridge.

In a second aspect of the invention (outside the wording of the claims) the screw pump may be located within the tapered portion of the cartridge and taper with the tapered portion. This means that the screw pump follows the geometry of the cartridge through the tapered portion, such that the pellets are more easily and efficiently fed into the screw pump from the chamber in use.

An internal wall of the cartridge may form at least the tapered portion, and may form a funnel configured to guide pellets contained within the chamber into the screw pump.

The cartridge may comprise an exit tube comprising the tapered portion of the cartridge, and the exit tube may contain the screw pump.

The tapered portion may extend in a first direction a distance (d), which distance (d) is between about 30% and 100% of a length (L) of the exit tube in the first direction. The first direction may correspond to an axial direction of the rotating member. The distance (d) may be between about 40% and 60% of a length (L) of the exit tube (212) in the first direction.

An outer diameter of the screw pump may remain substantially flush with an inner surface of the cartridge within the tapered portion thereof.

The first and second aspects of the invention contribute to solving essentially the same problem, namely the effect of a harsh interface between the screw pump and the interior surface(s) of the chamber. This is solved in each case as discussed above, and involves the same effect of easier and more efficient feeding of pellets into the screw pump. It should be noted that the present invention is not limited to the first and second aspects.

In any of the aspects and embodiments described above and herein, a largest dimension of the pellets may be between about 150 µm and 1200 µm. The pellets may have other dimensions, including any of the specific dimensions specified elsewhere herein.

The device may further comprise a plurality of pellets providing an oral dosage form contained within the chamber.

The rotating member may comprise one or more fins located at an entrance to the screw pump and configured to collect and direct pellets into the screw pump. Each of the one or more fins may be aligned and/or associated with a respective screw start of the screw pump. Such fins may beneficially assist in breaking up and avoiding clogging of pellets as they enter the screw pump.

The rotating member may comprise one or more baffles configured to rotate with the rotating member and assist in moving pellets through the chamber and into the tapered portion. Such baffles may beneficially assist in breaking up and avoiding clogging of pellets as they move towards the screw pump.

In an aspect of the invention there is provided a method of using a device as described above, the method comprising rotating the screw pump, e.g., using the rotating member to cause pellets to be dispensed from the device.

The method may further comprise:
filling the chamber with pellets providing an oral dosage form;
determining an amount of rotation of the screw pump that will cause a predetermined (and/or approximate) amount of the pellets to be dispensed from the device; and
rotating the screw pump by the predetermined amount to cause the predetermined (and/or approximate) amount of pellets to be dispensed from the device.

In any of the aspects and embodiments described above and herein, the chamber may extend from a first end of the device to a second, dispensing end of the device. The cartridge may extend from a first end to a second, dispensing end, and the screw pump may be located at the second, dispensing end of the cartridge.

The screw pump may be located at the second, dispensing end of the device.

The screw pump may be gravity fed. In other words, pellets held within the chamber may be moved towards the second, dispensing end at least partially by gravity, when the device is in a dispensing orientation (for example, with the dispensing end pointing downwards).

The device may be a hand-held and/or portable device. In other words, the device may be held and transported using one hand and/or operable using one hand.

For example, the device (e.g., the entire device or the cartridge) may have a length (corresponding to its longest dimension) of no more than about 250 mm (such as less than about 200 mm, about 150 mm or about 100 mm), and a width or height (i.e., transverse to its length) of no more than about 50 mm, and optionally no more than about 40 mm (and in some embodiments less than 30 mm or even less than 20 mm).

In order to optimise its hand-held nature, the device may have a length between about 150 mm and about 220 mm (for example about 160 mm and about 180 mm, and optionally about 165 mm), a width (transverse to its length) between about 35 mm and about 45 mm (optionally about 40 mm), and a height (transverse to its width) of between about 22 mm and about 32 mm (optionally about 28 mm).

The device (or cartridge) may weigh no more than about 500 g, about 400 g, about 300 g, about 200 g, or even about 100 g. This can ensure that the device is light enough to carry in one hand.

The cartridge (or cartridge assembly) may have a length (corresponding to its longest dimension) of between about 90 mm and about 120 mm (optionally about 105 mm), a width (transverse to its length) between about 33 mm and about 43 mm (optionally about 40 mm), and a height (transverse to its width) of between about 15 mm and about 32 mm, for example between about 23 mm and about 32 mm (optionally about 28 mm). In combination with any of the above values for lengths of the cartridge (or cartridge assembly) the width could instead be between about 33 mm and about 43 mm, and the height could instead be between about 15 mm and about 25 mm.

The screw pump may be or comprise part of the rotating member. For example, the screw pump may comprise one or more screw threads formed around the rotating member, such that the screw pump forms part of the rotating member. The term "one or more" is used herein due to the possibility that the screw pump may comprise one or more screw starts, each forming a separate screw thread. Although the plural term is used hereinafter for brevity, it will be appreciated that the references to screw thread or threads herein encompass a singular screw thread or multiple screw threads.

The screw pump may comprise one or more screw threads having a variable pitch. This has been found to assist in transport of the pellets through the screw pump, for example by packing or compressing the pellets towards the outlet thereof. The pitch may be variable along the axial length of the screw pump. The pitch may progressively (e.g., continuously) increase in an axial direction away from the outlet, for at least some (or all) of the axial length of the screw pump. Stated differently, the pitch may progressively (e.g., continuously) decrease in an axial direction towards the outlet, for at least some (or all) of the axial length of the screw pump).

This feature is seen as advantageous in its own right and therefore, from an aspect of the invention there is provided a cartridge, screw pump and rotating member as described above, wherein the screw pump comprises one or more screw threads having a variable pitch as described above.

In any of the aspects and embodiments described above and herein, the length of the screw section (e.g., along the longitudinal axis of the cartridge) may be defined by the length of the screw threads, which may be between about 10 mm and about 30 mm, for example between about 10 mm and 20 mm.

The device may be configured such that as the rotating member and screw pump are rotated in use, pellets travel along the screw threads of the screw pump from the portion of the screw threads extending into the chamber to the opposite end of the screw threads for dispensing from the screw pump.

The screw threads may cooperate with an inner cylindrical surface of the cartridge to form the screw pump, such that, as the rotating member rotates in use, the screw threads rotate within the inner cylindrical surface, causing pellets contained within the chamber to enter the screw threads, and travel down the screw threads for dispensing from the screw pumps. It should be noted that the cartridge may not itself be generally cylindrical. Rather, in order to form the screw pump the cartridge may comprise an inner cylindrical surface, although this should not be interpreted as necessarily meaning the cartridge itself is cylindrical in whole or in part.

The cartridge and/or chamber may be any suitable shape, for example cylindrical or cuboid. The cartridge and/or chamber thereof may be cylindrical at least in part, and the cylindrical portion of the cartridge and/or chamber may comprise the inner cylindrical surface of the screw pump as well as at least part of the chamber for holding pellets. In this embodiment the cartridge may be open at the second, dispensing end of the device, and the rotating member may comprise a screw section (forming part of the screw pump) having an outer diameter that substantially matches an inner diameter of the cartridge and/or chamber at the second, dispensing end of the device.

Alternatively, the cartridge may comprise an outlet or exit tube (e.g., as described above) that extends from the chamber. The exit tube may have a width or diameter that is less than an inner diameter of the chamber. The rotating member may extend into the exit tube, such that the inner cylindrical surface of the exit tube forms the inner cylindrical surface of the screw pump. In these embodiments, the cartridge and/or chamber may comprise a frustoconical or tapered portion (e.g., as described above) at the second, dispensing end of the cartridge and/or chamber that directs pellets contained in the chamber into the exit tube.

In various embodiments a majority of the length of the rotating member (e.g., within the cartridge) may be absent of the screw threads that forms the screw pump. For example, at least about 70%, 80%, 90% or even 95% of the length of the rotating member (e.g., within the cartridge) may be absent of the screw threads that forms the screw pump. This means that the screw threads only act on and collects pellets that are towards the second, dispensing end of the chamber, which can be beneficial for pellets that are located towards the first end in that the screw threads does not act on or otherwise interfere with the majority of the pellets.

Gravity (and/or a plunger device as described below) may be used to move pellets to the dispensing end of the chamber, at which point they may be collected by the screw threads and taken into the screw pump.

The device may further comprise a device (e.g., a plunger) configured to force to pellets contained within the chamber towards the screw pump. This device may act in addition to gravity, such that a combination of gravity and the force provided by the device moves pellets contained within the chamber towards the screw pump. For example, the device may be or comprise a plunger in the form of a weight that is configured to rest on top of pellets contained within the chamber when the device is in an orientation that permits dispensing of pellets.

The device may comprise a plunger configured to move along the rotating member automatically or as a result of the rotation of the rotating member. For example, a portion of the rotating member within the chamber may comprise a screw thread (e.g., a plunger screw thread, which may be distinct from any screw thread of the screw pump), and the plunger may form a nut around the rotating member that is configured to travel along the screw thread of the rotating member in use, such that, as the rotating member rotates, the plunger moves towards the screw pump so as to force pellets contained within the chamber towards the screw pump. The plunger may be configured to abut and/or contact an inner surface of the cartridge and/or chamber, and a friction fit may exist between the plunger and the inner surface of the cartridge and/or chamber, to help prevent the plunger rotating with the rotating member.

The friction fit may be particularly useful in embodiments in which the plunger rotates within a cylinder (e.g., a cylindrical-shaped cartridge). The friction fit described (i.e., to prevent the plunger rotating may be particularly important when using a cylindrical cartridge (and/or a cylindrical inner surface along which the plunger moves). For non-cylindrical cartridges (or non-cylindrical surfaces) the plunger may be prevented from rotating due to the abutment of the perimeter of the plunger with the inner surface(s) of the cartridge. For example, if the cartridge is square or cuboid then the plunger cannot rotate.

In various embodiments, the device may include certain features that provide a driving force to the plunger towards pellets located within the chamber, for example in addition to or other than relying on the weight of the plunger as described above. For example, a ratchet mechanism may be used to ensure that the plunger can only move in a single direction, namely towards the pellets located within the chamber. Alternatively, or additionally, a resilient member (e.g., a spring) may be provided (e.g., biased between a surface of the plunger and a portion of the cartridge) to force the plunger towards the pellets located within the chamber. Alternatively, or additionally, a source of pneumatic air may be provided, which may pressurise the plunger towards the pellets located within the chamber.

The device may comprise a deformable material press fitted between the rotating member and the cartridge, wherein the plunger is configured to push the deformable material along the longitudinal axis of the rotating member and the deformable material is configured to move pellets as it is pushed by the plunger (e.g., scrape one or more (or all of the) inner walls of the cartridge that form the chamber), so as to assist in moving pellets towards the screw pump.

The plunger may comprise one or more teeth or tines that extend from a main body of the plunger in an axial direction (relative to a longitudinal axis of the rotating member). The teeth may comprise a rail at a distal end (away from the main body) and configured to engage a screw thread on the rotating member, such that rotation of the rotating member causes the rails to travel along the screw thread and move the plunger along the axis. The teeth may be configured to flex in a radial direction, such that the rails can disengage from the screw thread.

The plunger may comprise one or more teeth or tines that extend from a main body of the plunger in an axial direction (relative to a longitudinal axis of the rotating member) and are biased towards the rotating member, so as to stabilise the plunger as it travels along the axis in use.

The plunger may comprise a resilient device comprising a plurality of projections (e.g., teeth or tines as described above) and a resilient member configured to bias the projections radially inwards. The resilient member may be an elastic band that extends concentrically around the rotating member.

The plunger may taper from a first thickness adjacent to the rotating member to a second thickness at a perimeter of the plunger (in a radial direction), wherein the second thickness is smaller than the first thickness. The perimeter may be adjacent to the inner walls of the cartridge that form part of the chamber. The plunger may taper to a point edge at the periphery of the plunger. The plunger may be configured to flex at the perimeter in a resilient manner. This reduces the friction between the plunger and the cartridge, and also assists in moving pellets towards the screw pump.

The device may further comprise a valve connected to an outlet of the screw pump and configured to prevent pellets from being dispensed from the screw pump, for example outside of a dispensing operation when the screw pump is not being rotated or prior to use, and may permit pellets to be dispensed from the screw pump during a dispensing operation, e.g., upon rotation of the screw pump in use.

The valve may comprise a resilient portion, e.g., a rubber membrane, that is configured to flex open to allow pellets to be dispensed as the screw pump rotates in use, and then flex back when the screw pump is not turning, so as to stop pellets falling out of the screw pump and to help seal the cartridge.

The resilient membrane may be movable between a first position and a second position, wherein in the first position the membrane blocks the end of the screw pump to prevent pellets from being dispensed and in the second position the membrane moves to unblock the end of the screw pump and allow pellets to be dispensed. In various embodiments the membrane may be configured to move due to a force applied to the membrane by the pellets via and upon rotation of the screw pump.

The valve may comprise an umbrella valve.

The valve may comprise a frustoconical portion that extends from a first end of the valve that connects to an outlet of the screw pump, to a second end of the valve. The second end of the valve may comprise an outlet portion comprising an outlet for dispensing pellets therefrom. The valve may be configured such that pellets need to be forced out of the valve, through its outlet, upon rotation of the rotating member. For example, the size of the outlet may be adapted to the size of the pellets to be dispensed, such that a smallest dimension (e.g., width) may be substantially equal to a width or diameter of a pellet, and/or may be less than about 1.5, 1.4, 1.3, 1.2 or 1.1 times a width or diameter of a pellet.

The device may comprise one or more actuators configured to rotate the rotating member. The actuator may be a mechanical or electromechanical actuator. The actuator may be located at the first end of the device. The actuator may be configured to rotate the rotating member. This may cause (in relevant embodiments) a plunger to move down the screw portion of the rotating member, and/or the screw section to rotate, causing the pellets to be dispensed via the screw pump.

The actuator may be an electromechanical actuator (e.g., one or more motors) or comprise an electromechanical actuating mechanism, so that the device may be able to dispense a precise amount of pellets repeatedly. The motors, and the control system may be powered by an integrated battery (which may be user replaceable), which may be held within the housing of the actuator.

The device may include a control system (e.g., as part of the actuator), which may be configured to dispense the dose within a predetermined time (e.g., less than 2, 3 or 5 seconds) after receiving an actuating signal from an input device or mechanism. The actuating signal may be initiated, for example, by a user pressing a suitable button or other input mechanism located on the device or optionally via a different control such as a wireless or wired, external control.

The actuator may comprise one or more electric (e.g., stepper) motors, which could be configured to rotate the rotating member by any suitable number of turns (e.g., steps) based on the situation at hand, e.g., based on the type of medicament within the cartridge, or the user. The control system may be provided in the form of a microcontroller, e.g., on a printed circuit board ("PCB"), which may be located within the housing of the device of within the actuator.

In an aspect of the present invention, there is provided a method of using a device in any of the aspects and embodiments described above.

The method may comprise:
rotating the screw pump, e.g., using the rotating member, by a predetermined amount of rotation to cause a predetermined amount of pellets to be dispensed from the device. The devices may relate to a disposable or relatively inexpensive device that aims to make the dispensing of short-term prescriptions, including but not limited to antibiotics, simpler and more convenient than e.g. existing blister pack medications and liquid formulations.

The method may further comprise filling the chamber with pellets providing an oral dosage form, determining an amount of rotation of the screw pump that will cause a predetermined amount of the pellets to be dispensed from the device, and rotating the screw pump by the predetermined amount to cause the predetermined amount of pellets to be dispensed from the device.

The method may comprise storing pellets providing an oral dosage form within the cartridge (e.g., the chamber thereof), wherein the pellets may include a medication or compound for treatment of one or more of Attention Deficit Hyperactivity Disorder ("ADHD" - wherein the medication or compound could include amphetamines and/or methylphenidate), general pain (wherein the medication or compound could include one or more of fentanyl, methadone, meperidine, tramadol, morphine, codeine, thebaine, oxymorphone, hydrocodone, oxycodone, hydromorphone, naltrexone, buprenorphine and methadone), immunosuppression post organ transplant (wherein the medication or compound could include one or more of tacrolimus, sirolimus, everolimus, corticosteroids, cyclosporine, mycophenolate and azathioprine), diabetes (wherein the medication or compound could include one or more of sitagliptin, vildagliptin, saxagliptin, linagliptin, metformin, canagliflozin, Dapagliflozin, empagliflozin and semaglutide), heart failure (wherein the medication or compound could include one or more of carvedilol, metoprolol, bisoprolol and diurethics), Parkinson's disease ("PD" - wherein the medication or compound could include levodopa and/or carbidopa ), epilepsy (wherein the medication or compound could include one or more of sodium valproate. carbamazepine, lamotrigine, levetiracetam, oxcarbazepine, ethosuximide and topiramate), depression (wherein the medication or compound could include one or more of Citalopram, bupropion, paroxetine, milnacipran, fluoxetine, duloxetine, fluvoxamine and reboxetine), schizophrenia (wherein the medication or compound could include one or more of aripiprazole, asenapine, brexpiprazole, cariprazine, clozapine, iloperidone, lurasidone and olanzapine), cancer, animal health.

The method may include using the device in the treatment of one or more of Attention Deficit Hyperactivity Disorder ("ADHD"), general pain, immunosuppression post organ transplant, diabetes, heart failure, Parkinson's disease ("PD"), epilepsy, depression, schizophrenia, cancer, and animal health. The oral dosage form within the cartridge (e.g., the chamber thereof), when used in a particular treatment, may include one or more of the medications or compounds referred to above in respect of that particular treatment.

The devices may relate to a more robust and long-term dispenser in which a first portion of the device (e.g., the actuator 300, 300', and optionally the rotating members 250, 250', 250A, 250B described below) comprises relatively complex or expensive portions of the dispensing mechanism, and one or more second portions of the device (e.g., the cartridge or cartridges 200, 200', 200AB described below) comprise relatively simple or inexpensive portions of the dispensing mechanism and the drug or oral dosage form. The one or more second portions may be replaceable cartridges (or a replaceable, integrated cartridge such as cartridge 200AB described below) that can be inserted into the first portion, such that the first portion can be used with different cartridges, and varying types of medicament, drug and dosages (e.g., oral dosage forms). In some embodiments, the first portion may include a housing (see, e.g., housing 400 described below) that is configured to hold the cartridge or cartridges and the second portion may include the cartridge or cartridges, which can be inserted into the housing.

The present invention relates to the integration of a cartridge and dispensing mechanism. The pellets are dispensed using a screw pump, for example in the form of an "Archimedes" screw mechanism, which has been found to be advantageous due to its accuracy, simplicity and ease of use. In some embodiments the device may comprise means for applying a pressure on the pellets within the chamber in which they are held, e.g., using a plunger 230 as described below. Applying pressure on the pellets in this manner in order to pack them well can mean that the dosage is consistent over the lifetime of cartridge, ensuring the first dose is of similar volume or weight to the last. Furthermore, such operation can mean that the devices are able to operate in any orientation.

In some embodiments the devices also incorporate the use of a plunger mechanism, which separates the pellets from the actuating mechanisms of the devices.

Further technical effects will become apparent from the description provided below.

### Definitions

Pellet - A single granule of a solid oral dosage form (e.g., a medicament, drug, medication, etc.), optionally having a dimension (e.g., a largest dimension, width or diameter) between about 150 µm and about 1200 µm (or even about 1500 µm, optionally between about 200 µm and about 300 µm, between about 300 µm and about 900 µm, or between about 500 µm and about 700 µm. By "diameter" it is meant that the pellets are assumed to be roughly spherical, although they could be irregular shaped. The diameter could correspond to a largest width of the pellets, if they are not assumed to be spherical. Pellets may or may not have a surface coating. Where a surface coating is provided, the dimensions provided herein correspond to the pellets with any surface coating.

In various embodiments the pellets may have a dimension (e.g., a largest dimension, width or diameter) within one or more of the following ranges: 150-300 µm; 150-400 µm; 200-400 µm; 200-500 µm; 300-500 µm; 400-600 µm; 300-700 µm 500-700 µm; 200-800 µm; 600-800 µm; 700-900 µm; 700-1200 µm; 800-1000 µm; 800-1100 µm; 900-1100 µm; 900-1200 µm; and 1000-1200 µm.

Dose - A single measurement (e.g., volume or weight) of pellets, for example totalling between about 0.05 ml to about 0.8 ml (such as about 0.1 ml to about 0.6 ml) by volume, for example about 0.3 ml by volume (although sometimes such pellets are measured by weight).

Dispensing Mechanism - A system, e.g., an electromechanical system that converts a user's action into the dispensing of a dose.

Cartridge - A component, e.g., a replaceable component used to store and dispense pellets, optionally containing features of the device such as a rotating member in the form of, e.g., a central threaded bar, a moving plunger and the pellets.

Plunger - A plate (although other types of plunger are envisaged) that can ensure the pellets stay packed together toward the dispensing end of the cartridge. The plate may be substantially rigid, but portions of the plate may be flexible, for example those portions that interact with other parts of the cartridge.

Dispensing Aperture - The open end of the cartridge that allows the pellets to be dispensed for consumption.

Cap - A container or tray that covers the delivery aperture, for collection of a dose and for protection of the stored pellets from humidity.

Press - An action performed by a user on the device when they wish to dispense their specified dosage, this could be rotary or linear motion.

It will be appreciated that references to "a" drug or medicament as referred to herein may be taken as "one or more" drugs or medicaments. For example, the pellets could comprise several drugs or medicaments in pellet form. This could be achieved by mixing pellets, each comprising a different drug or medicament, and/or mixing drugs or medicaments within each pellet.

### BRIEF DESCRIPTION OF THE DRAWINGS

Various embodiments will now be described, by way of example only, and with reference to the accompanying drawings in which:
**FIG.** 1 shows a perspective view of a device capable of dispensing a drug or medicament (e.g., an oral dosage form) in pellet form;
**FIGS.** 2 and 2A show a cutaway view of the device shown in **FIG.** 1;
**FIG.** 3 schematically indicated a screw thread that is located at the transition point or confluence of a tapered surface and an exit tube;
**FIG. 4** illustrates an embodiment of the invention showing a second, dispensing end of a device similar to that of **FIG.** 1, but wherein the screw pump is displaced from the confluence of the tapered surface and the exit tube;
**FIG.** 5 (which is outside the wording of the claims) illustrates an embodiment of the invention showing a second, dispensing end of a device similar to that of **FIG.** 1, but wherein the screw pump is located within the tapered portion of the cartridge and tapers with the tapered portion;
**FIGS.** 6A and 6B (which are outside the wording of the claims) show a variation of the embodiment of Fig. 5 (although could be applied to the embodiment of Fig. 4 as well) in which a rotating member comprises one or more fins configured to collect and direct pellets into the screw pump;
**FIGS.** 7A and 7B (which are outside the wording of the claims) show a further modification to the Fig. 5 embodiment (which could also be applied to that of Fig. 4) in the form of one or more baffles configured to rotate with the rotating member and displace or assist in moving pellets through the cartridge;
**FIG.** 8 shows schematically an outline of the screw thread of the screw pump and various dimensions that may be associated therewith;
FIGS. 9 and 10 show an embodiment of a screw thread having a variable pitch;
FIGS. 11 and 12 shows an embodiment including two cartridges that are positioned side-by-side within a housing;
FIGS. 13, 14A and 14B show an embodiment incorporating a first valve located over the exit tube of the cartridge;
FIGS. 15 and 16A-16G show an embodiment incorporating a second valve located over the exit tube of the cartridge in the form of a plug;
FIGS. 17, 18A and 18B show an embodiment incorporating a modified exit tube;
FIGS. 19A and 19B show an embodiment that includes a movable component that may be located over an outlet end of the exit tube;
FIGS. 20A-20C show an embodiment that is a modification, wherein the valve shown in the embodiment of FIGS. 16A and 16B is replaced by a different valve that extends in a similar manner from the end of the rotating member;
FIG. 21A shows a modified rotating member having a screw thread that communicates with an internal passage;
FIG. 21B shows a modification to the embodiment of FIG. 21A in which a resilient cap is placed over the end of the rotating member to prevent pellets from being dispensed when the device is not operating;
FIGS. 22, 23, 24A and 24B show a device comprising a cap that is configured to connect to the cartridge at the second, dispensing end thereof so as to cover the exit tube;
FIGS. 25 to 26 show an embodiment of a cartridge that is similar to the dual cartridge embodiment of FIGS. 11 and 12, except that the two cartridges are combined into a single unit;
FIGS. 27, 28A and 28B show an embodiment of a cartridge wherein the screw section of the rotating member is replaced by a screw section in the form of a 'twisted plate' arrangement;
FIGS. 29A, 29B and 29C show an embodiment of a device in which the plunger is accompanied by a deformable material that is positioned on the radially extending surface of the plunger;
FIGS. 30A, 30B and 30C show an embodiment in which the plunger of a device is provided with a plurality of axially extending teeth or projections;
FIGS. 31A, 31B and 31C show an embodiment in which the plunger of a device includes a resilient device that has a similar function to the teeth of the embodiment of FIGS. 30A, 30B and 30C; and
FIGS. 32A, 32B and 32C show an embodiment of a device having a modified plunger comprising a shape configured to reduce the friction between the plunger and the walls of the cartridge.

### DETAILED DESCRIPTION

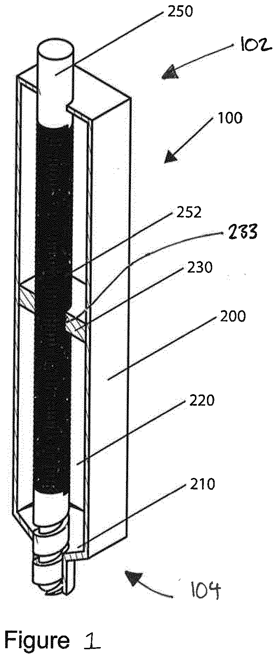

**FIG.** 1 shows a perspective view of a device 100, which is a delivery device capable of dispensing a drug or medicament (e.g., an oral dosage form) in pellet form. The device 100 has the aim of making the dispensing of pellet-type dosages more efficient, with various embodiments directed to improving the mechanics of the device to prevent blockages and/or grinding of pellets as they travel through the device.

The device 100 comprises a first end 102 for connecting to an actuator or other driving mechanism (e.g., a motor), and a second end 104 (opposite the first end 102) that comprises the dispensing end of the device 100. In use, the medication in pellet form will be dispensed out of the second end 104 as a result of the operation of the driving mechanism (e.g., motor).

The device 100 comprises one or more cartridges 200 that are configured to attach to the actuator or driving mechanism (e.g., motor) at the first end 102 of the device 100. The cartridge 200 comprises one or more chambers 220 that are configured to store or hold a plurality of units of the oral dosage form (in this case pellets).

The device 100 comprises a rotating member 250 extending through the cartridge 200. As described in more detail below, at the first end 102 of the device 100 the rotating member 250 connects to the actuator or driving mechanism (e.g., motor), which is configured to rotate the rotating member 250 so as to cause the pellets to be dispensed from the second end 104 of the device 100.

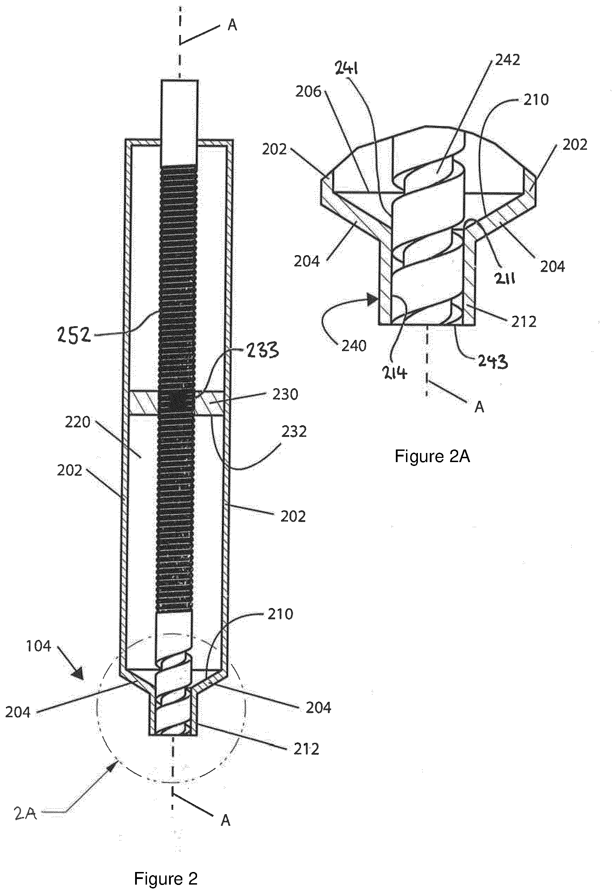

The device 100 comprises an outlet (e.g., exit tube 212 in **FIG.** 2) at the second end 104 thereof, through which pellets (drug, medicament, etc.) are dispensed.

**FIGS.** 2 and 2A show a cutaway view of the device 100 shown in **FIG.** 1, which shows the interior of the cartridge 200 and some features of the rotating member 250 in more detail. The cartridge 200 is hollow and, as noted above, comprises a chamber 220 for holding the pellets, and through which the rotating member 250 extends from the first end 102 of the device 100 to the second end 104 of the device 100.

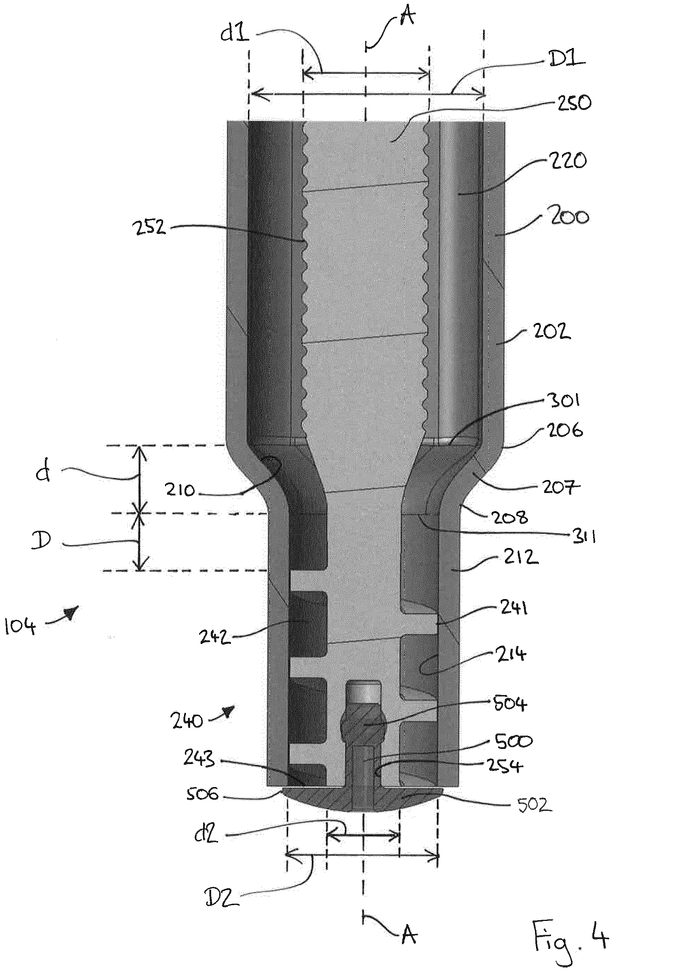

The chamber 220 and/or the cartridge 200 may be substantially hermetically sealed (e.g., with the exception of the passage through which pellets are dispensed). For example, at the first end 102 the connection between the rotating member 250 and the cartridge 200 may comprise a seal, for example an elastomeric gasket or valve (not shown). Similarly, at the second, dispensing end 104 of the device 100 a suitable seal (not shown) may be provided between the rotating member 250 and exit tube 212. For example, a packaging seal may be provided that covers and seals the outlet of the device (e.g., the exit tube 212), which a user can remove (e.g., peel off) when they wish to begin use. Additionally, or alternatively a valve may be used to at least partly seal the second, dispensing end of the device 100 (an example "umbrella valve" is shown and described in respect of **FIG.** 4). These features can help prevent air and/or moisture from entering the chamber 220 and interacting with the units of the solid oral dosage form undesirably.

The rotating member 250 extends into the exit tube 212 at the second end 104 of the device 100, and comprises a screw section 240. Together, the exit tube 212 and screw section 240 form a type of screw pump configured to dispense pellets from the second end 104 of the device 100. That is, pellets will enter a screw thread 242 of the screw section 240 and, upon rotation of the rotating member 250, will be forced out of the exit tube 212 via the screw thread 242 and be dispensed from the device 100.

The rotating member 250 and the cartridge 200 may have a common longitudinal axis, which may also be the axis of rotation of the rotating member 250. This can usefully provide a symmetrical loading of pellets into the screw section 240. However, in various embodiments the longitudinal axis of the cartridge 200 may be offset from that of the rotating member 250 and/or the axis of rotation of the rotating member 250 and still achieve the technical effects described elsewhere herein.

**FIGS.** 1 to 2A show the cartridge 200 having an oblong shape, although this is not essential, and the cartridge 200 could have any suitable shape, e.g., cylindrical.

The device 100 may further comprise a plunger 230 (as shown in **FIGS.** 1 to 2A) that is configured to move along the rotating member automatically or as a result of the rotation of the rotating member.

Each cartridge 200 holds pellets within the chamber 220 thereof, as described above. In embodiments involving a plunger 230, the volume of the chamber 220 varies during operation of the device 100 and throughout its lifetime by the action of the plunger 230, which will be described in more detail below.

At one end, the chamber 220 is enclosed at least in part by the plunger 230, and more specifically a radially extending surface 232 of the plunger 230 that faces the chamber 220. The other end of the chamber 220 is enclosed at least in part by a surface 210 of the cartridge 200. The rotating member 250 extends through the chamber 220 along the longitudinal axis A of the cartridge 200.

**FIG.** 2 shows a cross-sectional view of the cartridge 200 comprising the plunger 230. As the rotating member 250 is rotated in use, the plunger 230 rests on top of the pellets (not shown) located within the chamber 220.

This plunger may act by gravity, to move pellets contained within the chamber towards the screw pump. For example, the plunger may be a weight configured to rest on top of pellets contained within the chamber when the device is in an orientation that permits dispensing of pellets. A no-back device (e.g., ratchet) may be present to prevent the plunger moving in a direction away from the dispensing end during use.

The plunger may be configured to move along the rotating member automatically or as a result of the rotation of the rotating member. For example, a portion of the rotating member within the chamber may comprise a screw thread (e.g., a plunger screw thread, which may be distinct from any screw thread of the screw pump), and the plunger may form a nut around the rotating member that is configured to travel along the screw thread of the rotating member in use, such that, as the rotating member rotates, the plunger moves towards the screw pump so as to force pellets contained within the chamber towards the screw pump. The plunger may be configured to abut and/or contact an inner surface of the cartridge and/or chamber, and a friction fit may exist between the plunger and the inner surface of the cartridge and/or chamber, to help prevent the plunger rotating with the rotating member.

The device 100 may include certain features that provide a driving force to the plunger 230 that acts in a direction towards pellets located within the chamber 220, for example other than relying on the weight of the plunger 230 as described above. For example, a ratchet mechanism may be used to ensure that the plunger 230 can only move in a single direction, namely towards the pellets located within the chamber 220. A resilient member (e.g., a spring) may be provided to force the plunger 230 towards the pellets located within the chamber 220. A source of pneumatic air may be provided, which may pressurise the plunger 230 towards the pellets located within the chamber 220.

In use the radially extending surface 232 of the plunger 230 presses onto the pellets and forces them towards the second, dispensing end 104 of the device 100, which assists in packing the pellets tightly within the chamber 220.

Although shown as extending perpendicular to the axis A in **FIG.** 2, the radially extending surface 232 of the plunger 230 could instead be shaped so as to fit precisely with an opposing surface 210 of the cartridge 200, which can enhance the capture of pellets within the chamber 220 so that they can be dispensed therefrom. For example, the surface 232 may be angled in a similar and cooperating manner with the opposing surface 210 of the cartridge 200.

In various embodiments, the plunger 230 is operatively connected to the rotating member 250 such that rotation of the rotating member 250 causes the plunger 230 to move axially along the rotating member 250 (i.e., along the longitudinal axis A of the rotating member 250 and the cartridge 200). For example, the plunger 230 may be a nut that translates along the rotating member 250 upon rotation thereof from the first end 102 of the cartridge 200 (i.e., the end to be inserted into the actuator - described below) to the second, dispensing end 104 of the cartridge 200.

In this manner, as the plunger 230 translates along the rotating member 250 the volume of the chamber 220 gradually decreases. Furthermore, pellets contained within the chamber 220 will be forced towards the second end 104 of the cartridge 200 by the plunger 230 throughout the operation and lifetime of the device 100.

To effectuate the direct movement of the plunger 230, the rotating member 250 may comprises a screw thread 252 that is configured to cooperate with a corresponding screw thread 233 on the plunger 230, in order to move it along the longitudinal axis A as aforesaid. At the second, dispensing end 104 of the cartridge 200 the rotating member 250 comprises the screw section 240, which is axially separated from the screw thread 252 that cooperates with the plunger 230.

In various embodiments the plunger 230 (or at least the screw thread 233 thereof) may be made from a thermoplastic elastomer ("TPE") or polybutylene terephthalate ("PBT") and/or may have a hardness of less than about 100, 80, 70, 60 or even 50 shore. The shore hardness test may be conducted at shore 00 or shore A. In these embodiments, as the plunger 230 moves along the axis A the screw thread 233 may disengage with the screw thread 252 when the plunger 230 meets sufficient resistance, e.g., from meeting the pellets or the end of the cartridge 200. This permits rotation of the rotating member 250 once the plunger 230 contacts the pellets and limits the force applied to the pellets by the plunger 230. Once the pellets reduced in volume during dispensing, for example, the resistance will reduce and the screw thread 233 will at some point engage again with the screw thread 252 to continue to move the plunger 230 along the axis A.

In various embodiments the screw thread 233 may be removed and a tight, friction fit may be used to move the plunger along the screw thread 252 as the rotating member 250 rotates. For example, the plunger 230 could have two friction surfaces, a first on its outer periphery that faces the inner surface of the cartridge 200, and a second on the inner periphery that faces the rotating member 250. The friction between the first friction surface may prevent the plunger 230 from rotating but allow the plunger 230 to move axially (i.e., along the axis A). The hole in the centre of the plunger 230 (through which the rotating member 250 extends) may be manufactured slightly smaller than the outer diameter of the screw thread 252. This means that the plunger 230 will move axially along the screw thread 252 as the rotating member 250 rotates, even though it does not comprise a cooperating screw thread itself. The plunger may be made of rubber to facilitate this embodiment. The second friction surface may be configured such that the plunger 230 will slip when the pellets are fully compressed, i.e., if the plunger 230 has forced the pellets down as far as they can go.

**FIG.** 2A shows the second, dispensing end 104 of the cartridge 200 in more detail, at which end there is located the exit tube 212, with the screw section 240 of the rotating member 250 extending through the exit tube 212 as discussed above.

A radially outer surface 241 of the screw section 240 may substantially contact (and/or abut) a radially inner surface 214 of the exit tube 212. That is, the outer surface 241 of the screw section 240 and the radially inner surface 214 of the exit tube 212 may substantially contact each other or abut (e.g., continuously or intermittently). This may not be to the extent that they have an interference or friction fit relative to each other, so as to ensure that they can move smoothly past each another and ensure reliable dispensing in use. That is, as the radially outer surface 241 of the screw section 240 rotates past the radially inner surface of the exit tube 212. It is envisioned that any tolerances between the outer surface 241 of the screw section 240 and the inner surface 214 of the exit tube 212 are as tight as possible whilst still allowing the screw section 240 to rotate within the exit tube 212.

For example, a small tolerance or gap may be present between the outer surface 241 of the screw section 240 and the inner surface 214 of the exit tube 212, e.g., due to manufacturing tolerances. If the surfaces are configured to contact each other (e.g., continuously or intermittently), the surfaces may be manufactured from low friction materials (e.g., a non-stick coating on or an additive applied to one or both of the opposing surfaces, using, e.g., Teflon), which may lead to a tight (e.g., contact fit) but without a friction or interference fit. In various embodiments (e.g., those including a cartridge containing pellets therein), a tolerance or gap between the outer surface 241 of the screw section 240 and the inner surface 214 of the exit tube 212 may be present, and may be large enough to allow free rotation of the shaft 250, but small enough to prevent any pellets (and/or pellet debris) from sliding between the gap (which could increase friction and inhibit free rotation).

The screw section 240 comprises a screw thread 242 configured to receive pellets contained within the chamber 220 and transport them, upon rotation of the rotating member 250, along the screw thread 242 to be dispensed out of the exit tube 212. The screw thread 242 consists of one or more starts, each forming a continuous helix that the pellets fill during operation of the device 100, for example due (at least in part) to the action of the plunger 230 pressing on the pellets within the chamber 220, which forces them into the screw thread 242.

The screw section 240 and the screw thread 242 thereof contact the inner radial surface of the exit tube 212 so as to form a screw pump (e.g., an "Archimedes" screw) with the exit tube 212 of the cartridge 200. That is, as the rotating member 250 rotates, the screw section 240 and screw thread 242 thereof will also rotate, causing pellets contained within the chamber 220 to enter the voids of the screw thread 242, travel down the screw thread 242 and exit the cartridge 200. The screw pump may comprise an outlet 243 through which pellets are dispensed.

The actuator or driving mechanism (e.g., a motor) may be configured to rotate the rotating member 250, and may be connected to the rotating member 250 at the first end 102 of the device as described above. The actuator may be configured to provide a rotary force to the rotating member 250, and, in turn, to the screw thread(s) 242, 252 of the rotating member 250. The actuator can be either mechanical (e.g., manually operated) or electromechanical (e.g., electrically operated, for example an electric motor). The actuator (or a control unit comprising the actuator) could be detachable from the cartridge 200, so that different cartridges could be connected to the same actuator or control unit.

In order to dispense the pellets from the cartridge 200, the actuator 300 may rotate the rotating member 250. This causes (in relevant embodiments) the plunger 230 to move down the screw thread 252 of the rotating member 250, and the screw section 240 to rotate, causing the pellets to be dispensed via the screw pump formed between the screw section 240 and the exit tube 212.

The device 100 may include a control system (e.g., as part of the actuator or control unit), which may be configured to dispense a dose of the pellets contained within the chamber 220, for example after receiving an actuating signal from an input device or mechanism. The actuating signal may be initiated, for example, by a user pressing a suitable button or other input mechanism located on the control unit or optionally via a different control such as a wireless or wired, external control.

By using an electromechanical actuating mechanism, the device 100 may be able to dispense a precise amount of pellets repeatedly. The motors, and the control system may be powered by an integrated battery (which may be user replaceable), which may be held within the housing of the actuator.

The actuator may comprise one or more motors. The actuator (e.g., the motor thereof) may be configured to rotate the rotating member 250 by an amount corresponding to a prescribed dose, or a portion of a dose. For example, the actuator may be configured to rotate the rotating member 250 in pulses, e.g., by operating for a certain period of time, e.g., 0.5 seconds. A dose may be made up of multiple pulses, so that different doses can be dispensed according to the number of pulses of the motor. For example, a 0.3 ml dose may correspond to about 3 seconds of motor rotation, and so the actuator may pulse the motor 6 times, which is 6 pulses at 0.5 seconds each.

The motors may be stepper motors, which could be configured to rotate the rotating member 250 by any suitable number of steps based on the situation at hand, e.g., based on the type of medicament within the cartridge 200, or the user. The control system may be provided in the form of a computer, processor, processing device or microcontroller, e.g., on a PCB, which may be located within the housing of the device 100 or within the actuator or control unit.

The cartridge(s) 200 may be made from a rigid material, for example polycarbonate or polyamide, although any suitable material may be used. Portions of the cartridge 200, for example those contacting the rotating member 250 and/or plunger 230 may have a reduced friction surface (e.g., reduced relative to the other parts of the cartridge) to aid in relative movement therebetween. The inner diameter of the cartridge 200 (i.e., forming the chamber 220) may be between about 5 mm to about 200 mm, optionally about 10 mm to about 20 mm. The cartridge 200 may have a length (corresponding to its longest dimension) of between about 90 mm and about 120 mm, a width (transverse to its length) between about 33 mm and about 43 mm, and a height (transverse to its width) of between about 15 mm and about 25 mm.

The exit tube 212 may have an internal diameter that substantially equals the diameter of the rotating member 250, and specifically the screw section 240 thereof. This internal diameter may be less than 10 mm, for example less than about 6 mm. The length of the exit tube 212 along the longitudinal axis A of the device 100 may be less than about 20 mm (such as about 15 mm or about 10 mm).

The volume of the chamber 220 (i.e., prior to operation or a maximum volume) may be less than about 50 mL, for example less than 20 mL or approximately equal to 11 mL.

The plunger 230 may be configured to fill the gap between the rotating member 250 and the walls of the container 200, such that pellets contained within the chamber 220 cannot move past the plunger 230 as it moves down the rotating member 250 in use.

In various embodiments the size (and, e.g., perimeter) of the plunger 230 may be such that a small gap exists between the plunger 230 and the walls of the cartridge 200, to avoid substantial friction between the plunger 230 and the cartridge 200. This can mean that pellets could pass between the plunger 230 and the walls of the cartridge 200 through the gap. In order to avoid this, the size (e.g., width) of the gap may be configured such that it is less than the size (e.g., an average size or diameter) of the pellets. Additionally, or alternatively a material that is deformable and/or of lower friction than the plunger 230 may be provided adjacent to the plunger 230 that is configured to contact the walls of the cartridge 200 as the plunger 230 moves in use.

The cartridge 200 may comprise a tapered portion at the second end 104 of the device 100, which tapered portion may be configured to guide or direct pellets contained within the chamber 220 into the screw threads 242 of the screw section 240. In other words, the surface 210 may be tapered or angled such that it is not perpendicular to the longitudinal axis A, but is oriented at an angle with respect thereto, for example an angle of greater than about 30°, greater than about 60°, or more. In other embodiments the surface 210 may be perpendicular to the longitudinal axis A. The tapered portion may be frustoconical or trumpet shaped.

The cartridge 200 may comprise one or more side portions 202 that connect to the tapered portion 204 at an axial position 206 **(****FIG.** 2A), from which the tapered portion 204 extends towards the exit tube 212. When the cartridge 200 is in its normal orientation, therefore, pellets will be caused to run down the tapered portion 204 (along the surface 210, which is now angled) and into the screw thread 242 of the screw portion 240.

As discussed above, although not shown, the lower surface 232 of the plunger 230 may have a matching geometry, such that when it reaches the end of its travel along the rotating member 250 the lower surface 232 of the plunger 230 contacts the tapered surface across substantially its entire area. This will aid in dispensing as many of the pellets as possible, which minimises waste. Since the screw thread 252 eventually gives way to the screw thread 242, it may be necessary to provide the screw thread on the plunger 230 away from its lower surface 232, so that a portion of the plunger 230 including the lower surface 232 extends below the screw thread of the plunger 230 (if present), allowing the surface 232 to contact, abut or at least move closer to the opposing surface 210 of the cartridge when the plunger 230 is at its lowest point (i.e., at the end of the screw thread 252).

The outer surface 241 of the screw section 240 may be made from a low friction material, for example nylon, polyethylene ("PE"), polyethylene terephthalate ("PET"), optionally containing friction reducing additives. The cartridge 200 and portions thereof that abut, oppose or contact the screw section 240, plunger 230 or other moving parts of the device 100 may also be made from a low friction material, for example nylon, polyethylene ("PE"), polyethylene terephthalate ("PET"), optionally containing friction reducing additives.

In the embodiment of **FIGS.** 1 to 2A, the screw section 240 is configured such that the height of the screw thread 242 extends above the exit tube 212 (towards the chamber 220) by at least one complete turn.

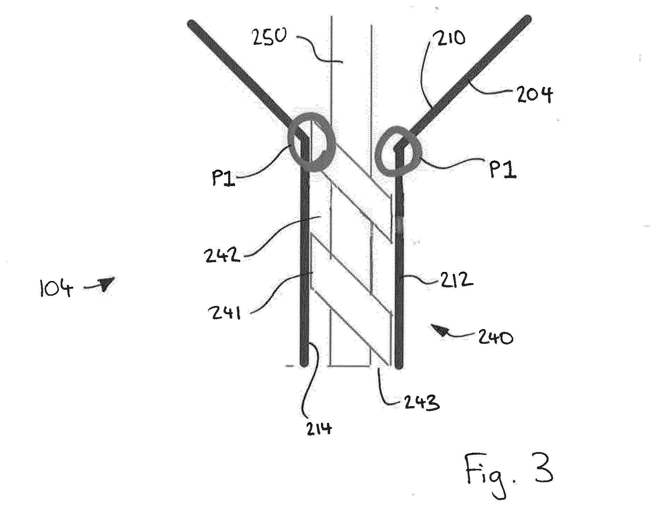

If the screw thread is located at or close to the transition point or confluence of the opposing surface 210 and the exit tube 212, then it has been found that some degree of shearing can occur. This is indicated in **FIG.** 3 at points P1, corresponding to the area surrounding a rim 211 that may form the transition point or confluence between the surface 210 and the exit tube 212.

In accordance with the invention, the screw pump is displaced from the transition point or confluence of the surface 210 and the exit tube 212, such that any shearing of the pellets at this location may be avoided. In various embodiments the screw pump (e.g., the screw section 240) is displaced towards the outlet 243 of the screw pump. In optimised embodiments, the cartridge 200 may comprise a tapered portion 207, as described above, as well as a displacement of the transition point or confluence of the surface 210 (which would be a tapered surface) and the exit tube 212. This provides further optimisation of the transport of pellets through this part of the device 100, since they can be fed efficiently from the chamber 220 into an entrance region of the exit tube 212 using the tapered portion 207, and then subsequently (rather than simultaneously) into the screw pump.

**FIG.** 4 illustrates an embodiment showing a second, dispensing end 104 (e.g., of a device 100 as described above) that comprises a tapered portion 207 that can ease the transport of pellets from the chamber 220 to the screw pump formed by the screw section 240, so as to optimise the transport of pellets as mentioned above.

In this embodiment the side portions 202 of the cartridge 200 follow a substantially straight (or cylindrical) profile until a first junction 206 between the side portions 202 of the cartridge 200 and the tapered portion 207, at which point the walls of the cartridge 200 formed by the tapered portion 207 form a funnel having a surface 210. The funnel and/or surface 210 are configured to guide pellets contained within the chamber 220 from an entrance 301 of the funnel to an entrance 311 of the exit tube 212 (which also corresponds to an exit of the funnel).

As can be seen from **FIG.** 4, the screw pump is displaced from the confluence of the surface 210 and the exit tube 212 (e.g., the entrance thereof, edge or rim 311) by a distance D (which is measured in a direction along the axis A of the rotating member 250). In other words, the entrance of the screw pump is displaced from the confluence, towards the outlet of the exit tube 212. This has been found to reduce the shearing of pellets at the interface between the tapered portion 207 and the exit tube 212, which lowers the chances of crushing or otherwise damaging pellets and provides for improved filling of the screw pump. In addition, it has been found that displacing the screw pump in this manner can reduce the torque requirements for the rotating member 250. Without wishing to be bound by theory, this may be due to the removal of the interaction between the screw pump and the rim 311, as well as the screw pump having a lower surface area in contact with the walls of the cartridge 200.

The tapered portion 207 may extend a distance d in the axial direction, wherein the displacement distance D of the screw pump may be at least 50% of the axial distance d of the tapered portion 207. In further refinements, the displacement distance D of the screw pump may be at least 60%, 70%, 80% or 90% of the axial distance d of the tapered portion 207. In one particular arrangement, the displacement distance D of the screw pump may be between about 50% and about 90% of the axial distance d of the tapered portion 207, for example between about 60% and about 80%.

The cartridge 200 may also taper such that the internal wall thereof (e.g., forming the chamber 220, tapered portion 207 and exit tube 212) tapers from a first diameter D1 to a second diameter D2, wherein the internal wall has the first diameter D1 in the portion of the cartridge 200 above the first transition 206 (e.g., above the tapered portion 207). The internal wall may taper from the first diameter D1 to the second diameter D2 as it extends through the tapered portion 207, such that the internal wall has the second diameter D2 once it reaches the exit tube 212.

In various embodiments the screw shaft 250 may also taper from a first diameter d1 to a second diameter d2, wherein the screw shaft 250 has the first diameter d1 in the portion of the cartridge 200 above the first transition 206 (e.g., above the tapered portion 207). The screw shaft 250 may taper from the first diameter d1 to the second diameter d2 as it extends through the tapered portion 207 of the cartridge 200, such that the screw shaft 250 has the second diameter d2 once it reaches the exit tube 212. This further optimises and assists transport of the pellets through this section of the device.

The embodiment of **FIG.** 4 also includes an optional valve located over the exit tube 212 of the cartridge 200 (and, e.g., the outlet 243 of the screw pump). The valve may be configured to prevent pellets from falling out of the screw pump unintentionally (e.g., when the rotating member 250 is stationary)

In the illustrated embodiment this is provided in the form of a plug 500. The plug 500 may be configured to contact an end of the exit tube 212 facing away from the chamber 220. In various embodiments, the plug 500 is configured to insert into a cavity 254 formed at the second, dispensing end 104 of the rotating member 250 (i.e., comprising the screw portion 240). The plug 500 comprises a base portion 502 and an elongate portion 504 that extends from a centre of the base portion 502 into the cavity 254 of the rotating member 250. The base portion 502 may be configured to rest (e.g., provide a seal) against the exit tube 212 (and, e.g., the outlet 243 of the screw pump), for example to seal (e.g., hermetically seal) the pellets within the cartridge 200, for example prior to or in use.

The valve may be an "umbrella valve" as embodied by the plug 500. That is, at least the base portion 502 of the plug 500 is resilient, e.g., a rubber membrane, wherein an outer rim 506 of the base portion 502 is configured to flex open as the pellets are pushed out of the screw pump in use, and then spring back when the screw pump is not turning, so as to stop pellets falling out and optionally to seal the cartridge 200 as well. The elongate portion 504 of the plug 500 may not substantially move from its position within the cavity 254 of the rotating member 250.

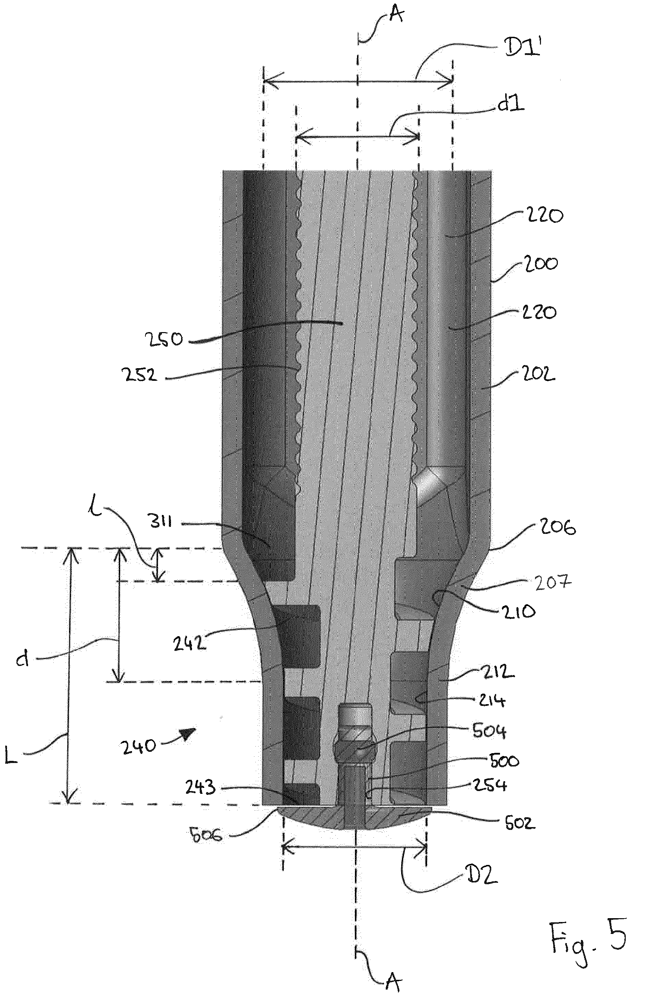

**FIG.** 5 shows another embodiment (which is outside the wording of the claims) showing a second, dispensing end 104 (e.g., of a device 100 as described above). Whereas the embodiment of **FIG.** 4 comprises a distinct tapered portion 207 and exit tube 212, the embodiment of **FIG.** 5 the exit tube 212 comprises a tapered, trumpet-shaped portion 207 to ease the transport of pellets from the chamber 220 to the screw pump formed by the screw section 240, so as to optimise the transport of pellets as mentioned above. Although shown as trumpet-shaped in **FIG.** 5, the tapered portion could be frustoconical.

In this embodiment the side portions 202 of the cartridge 200 follow a substantially straight (or cylindrical) profile until a junction 206 between the side portions 202 of the cartridge 200 and the tapered portion 207 of the exit tube 212, at which point the walls of the cartridge 200 form a funnel having a surface 210. The surface 210 is configured to guide pellets contained within the chamber 220 from an entrance 311 of the exit tube 212, through a portion of the screw pump to eventually be dispensed from the outlet 243 thereof.

The tapered portion 207 of the exit tube 212 extends in an axial direction (i.e., corresponding to the axis A) for a distance d, which may be roughly 50% of the length L of the exit tube 212. In various embodiments the distance d may be at least 30%, 40%, 50%, 60%, 70%, 80%, 90% of the length L of the exit tube 212. The distance D may even be 100% of the length L of the exit tube 212, such that the entire exit tube 212 is tapered or trumpet -shaped.

The screw pump in this embodiment is located at least partially within the tapered portion 207 of the exit tube 212. For example, the starting point of the screw pump may be displaced from the entrance 311 of the exit tube 212 by a distance I, which distance I may be less than 50%, 40%, 30% or even 10% of the axial extent of the tapered portion 207 (i.e., the distance d). In various alternative embodiments the screw pump may not be displaced at all from the entrance 311 of the exit tube 212.

The screw pump comprises a screw thread 242 that tapers with the tapered portion 207 of the exit tube 212, such that the screw pump tapers from a first diameter D1' at its starting point (e.g., adjacent to the entrance 311 of the exit tube 212) to a second diameter D2 adjacent the outlet of the exit tube 212 (and the outlet 243 of the screw pump), wherein the first diameter D1' is greater than the second diameter D2.

The first diameter D1' of the screw pump may be larger than the diameter d1 of the rotating member 250, such that the screw thread 242 of the screw pump extends outward from the diameter d1 of the rotating member 250. As such, pellets will rest on top of the screw thread 242 without having to be moved substantially radially inward before entering the screw pump. This further optimises the transport of the pellets into the screw pump.

In various embodiments the screw thread 242 of the screw pump remains flush (or substantially flush) with the inner surface of the exit tube 212, which comprises the surface 210 of the tapered portion thereof. As such, the pellets contained within the chamber 220 do not meet a harsh interface as shown, e.g., in **FIG.** 3 (see points P1). This creates a larger and easier entrance to the screw pump for the pellets and reduces the risk of a blockage of pellets, or crushing thereof.

As with the embodiment of **FIG.** 4, a valve (e.g., the umbrella valve 500) may be included as shown (although this is optional). The features of this valve may be the same as described above with reference to **FIG.** 4.

Some further modifications to the second, dispensing and 104 of the device 100 will now be described. These will be shown in connection with the embodiment of **FIG.** 5, but it will be appreciated that the features described are applicable to any device that incorporates a screw pump.

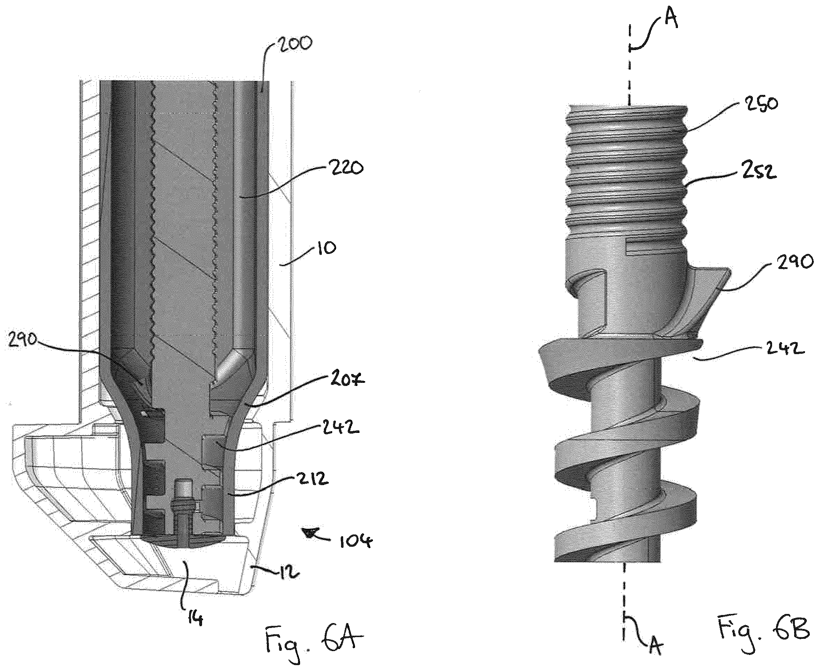

**FIGS.** 6A and 6B show an embodiment (which is outside the wording of the claims) in which the rotating member 250 comprises one or more fins 290 configured to collect and direct pellets into the screw pump (e.g., the screw thread 242 thereof). Only one fin 290 is shown in **FIGS.** 6A and 6B, but it will be appreciated that more (e.g., 2, 3 or even 4) could be provided, for example based on whether multiple screw starts are provided within the screw pump. For example, the screw pump may comprise multiple screw starts as described elsewhere herein, and each of the plurality of fins 290 could be aligned and associated with one of the screw starts. The one or more fins 290 may each be configured to lead into a respective screw start of the screw pump (e.g., screw thread 242 thereof). If a plurality of fins 290 are provided, they may be spaced substantially equally about the circumference of the rotating member 250.

The one or more fins 290 may be angled, as shown in **FIGS.** 6A and 6B. In some embodiments the fins 290 may extend from the screw thread 242 (e.g., a screw start thereof) and may have a steeper angle than the respective screw thread (e.g., larger/steeper than a thread angle of the screw thread 242). The angle of the fins 290 (e.g., taken along a longitudinal axis thereof) relative to the axis A (e.g., subtending from the axis A) can vary from about 10 degrees (e.g., at one end of the fin 290) to about 80 degrees (e.g., at the other end of the fin 290).

In various embodiments the width of the each fin 290 could taper, for example from a first, relatively large width at the point at which it meets the screw pump to a second, relatively small width at its opposite end (relative to the axis A). The first width may correspond to a width of the screw thread 242, while the second width could be zero.

The fin 290 could wrap around the screw shaft 250, and in various embodiments may extend for between about 10 degrees to about 180 degrees around the screw shaft 250.

The fins 290 may be positioned at the start of the screw thread 242 and may be contoured to guide pellets from within the chamber 220 into the screw pump (e.g., the screw thread 242 thereof). The fins 290 may also help to loosen up pellets that are clustered within the chamber 220 so that they more easily travel through the screw thread 242. Use of fins 290 can also help to ensure improved packing and/or transport of pellets through the screw pump, for example by helping to remove voids in the screw thread(s) 242 thereof. This can help to improve accuracy.

In various embodiments the one or more fins 290 may be located between the screw pump (e.g., screw thread 242 thereof) and the screw thread 252 of the rotating member 250 along which the plunger 230 moves.

The one or more fins 290 may extend out from a main body of the rotating member 250 in a radial direction (e.g., relative to axis A), and may extend at least as far as a radial extent of the screw thread 242. In some embodiments, the fins 290 may extend further in the radial direction than the screw thread 242, so as to further facilitate scooping pellets into the screw thread 242.

The one or more fins 290 may be located within a tapered portion 207 of the cartridge 200 (e.g., as described above), whether this forms a separate element to the exit tube 212 (as shown in, e.g., **FIG.** 4), or forms part of the exit tube 212 itself (as shown in, e.g., **FIG.** 5). The fins 290 may be located at or adjacent to an entrance 301, 311 of the tapered portion 207. In various embodiments the fins 290 could be located above the tapered portion 207 of the cartridge 200, and could extend into the tapered portion 207.

The fin 290 may extend a distance above the screw pump (e.g., screw thread 242 thereof) equal to approximately a pitch of the screw pump (e.g., screw thread 242 thereof). The pitch may be a maximum pitch (if this varies) For example, the fin 290 may extend a distance above the screw pump (e.g., screw thread 242 thereof) that is between about 0.5 and about 1.5 times a pitch of the screw pump (e.g., the screw thread 242 thereof). In various embodiments the fin 290 may extend a distance of between about 1 mm and about 10 mm above the screw pump (e.g., screw thread 242 thereof).

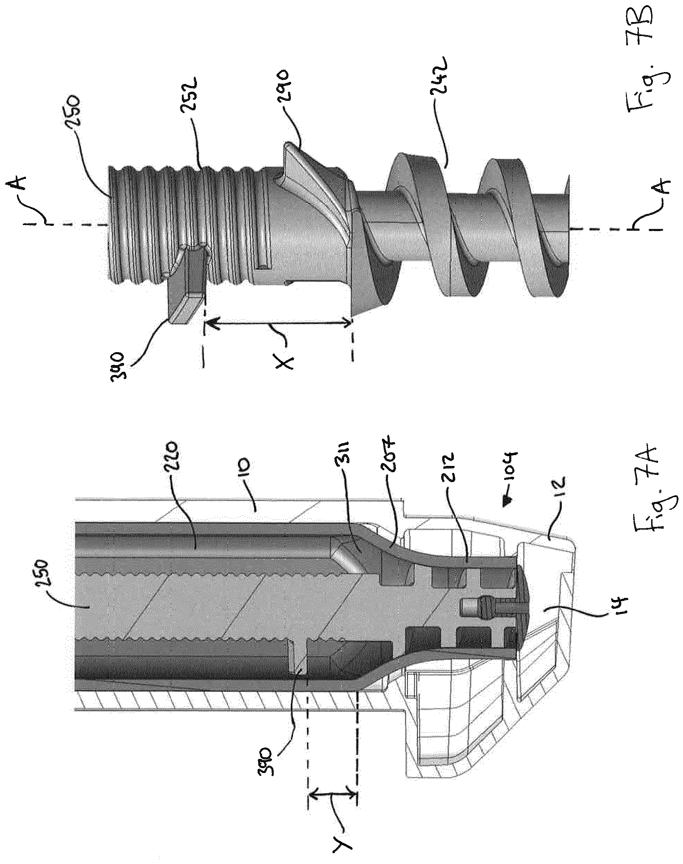

**FIGS.** 7A and 7B (which are outside the wording of the claims) show a further modification in the form of one or more baffles 390 configured to rotate with the rotating member 250 and intended to assist in the movement of the pellets, for example stirring the pellets, and breaking clusters of pellets up, so that they are in an optimised condition for being transported through the screw pump.

Only one baffle 390 is shown in **FIGS.** 7A and 7B, but it will be appreciated that more (e.g., 2, 3 or even 4) could be provided. If a plurality of baffles 390 are provided, they may be spaced substantially equally about the circumference of the rotating member 250. Alternatively, or additionally the baffles 390 may be located at the same, or different axial positions along the axis A of the rotating member 250.

The baffle(s) 390 may extend a distance from the screw shaft 250 (e.g., transverse to the axis A) that is between about 0.5 mm and about 3 mm. Any or all of the width and/or length and/or thickness of the baffle(s) may be between about 0.5 and about 3 mm.

Although **FIGS.** 7A and 7B show the baffle 390 extending from a screw thread 252 of the screw shaft 250, this may not be the case and the baffle 390 could be positioned outside of the screw thread 252, for example between the screw thread 252 and the screw pump (e.g., screw thread 242 thereof), and/or between the screw thread 252 and the fin 290 (e.g., an upper extent thereof along the axis A).

The one or more baffles 390 may be provided in addition to the fins 290, although in various embodiments the baffles 390 could be provided without the fins 290.

The one or more baffles 390 may be similar to the fin 290 described above, but may be axially displaced from the screw pump (e.g., screw thread thereof. In embodiments involving a screw thread 252 on the rotating member 250 for moving a plunger 230, the baffles 390 may be located on the rotating member 250 at the screw thread 252 thereof.

The baffles 390 may extend out from a main body of the rotating member 250 in a radial direction (e.g., perpendicular to axis A), and may extend at least as far as a radial extent of the screw thread 242. In some embodiments, the baffles 390 may extend further in the radial direction than the screw thread 242, so as to facilitate the breaking up of pellets as they move past the baffles 390 in use.

The one or more baffles 390 may be angled slightly, as shown in **FIGS.** 7A and 7B. In some embodiments the baffles 390 may have a steeper angle than the screw thread (e.g., larger/steeper than a thread angle of the screw thread 242), although may have a shallower angle than the one or more fins 290 (if provided). The baffles 390 may be positioned a distance X from the screw pump (e.g., the screw thread 242 thereof), and/or a distance Y from an entrance 301, 311 to a or the tapered portion 207 of the cartridge 200, whether this forms a separate element to the exit tube 212 (as shown in, e.g., **FIG.** 4), or forms part of the exit tube 212 itself (as shown in, e.g., **FIG.** 5).

The one or more baffles 390 have a function similar to the fins 290. It has been found that positioning a baffle 390 that is axially displaced from the screw pump provides an additional function and capability, in that (although not wishing to be bound by theory) the baffle 390 will churn pellets in advance of the screw pump, so that they can more easily pass into the screw pump, as further aided by one or more fins 290 (if provided) as described above.

The length X may be at least 1, 2 or even 3 times a pitch of the screw pump (e.g., a screw thread 242 thereof). The pitch may be a maximum pitch (if this varies). For example, if the screw thread 242 has a pitch (e.g., maximum pitch) of about 4 mm, X may be about 4 mm, 8 mm or 12mm. In various embodiments X may be about 3 times a pitch (e.g., maximum pitch) of the screw pump (e.g., a screw thread 242 thereof). In various embodiments the length X may be within the range of about 6 mm to about 20 mm.

The baffle 390 may be positioned about 5 mm above the screw pump (e.g., a screw thread 242 thereof), and in various embodiments could be positioned a distance between about 1 mm and about 15 mm about the screw pump (e.g., a screw thread 242 thereof).

Generally, the length of the screw section 240 may be defined by the length of the screw thread 242, which may be between about 10 mm and about 30 mm, for example between about 10 mm and 20 mm.

The exit tube 212 may have a length of between about 5 mm and about 20 mm (optionally between about 10 mm and about 15 mm), wherein the length of the screw thread 242 in a direction along the longitudinal axis A of the cartridge 200 may be at least 0.5 times the length of the exit tube 212 in the same direction, for example between about 0.5 and about 2 times the length of the exit tube 212, or about 0.5 to about 1 times the length of the exit tube 212.

Pitch has been found to have an impact on the precision of the dispensed dose, especially in terms of pellet run-through (pellets running through the screw section even though the rotating member is not turning). This can cause the device to "leak" pellets in certain situations. A high pitch seems to increase the risk for pellets running through the screw section outside of a dispensing operation. As such, it has been found that a low pitch (e.g., less than about 15-30 times a diameter of the pellets, as described below) has been found to increase the precision of a dispensed dosage of pellets, for example because it is easier to control an output rate of the pellets. A low pitch may increase load, and the torque requirements for driving the rotating member, and this is the trade-off that led to this pitch range being considered important.

Accordingly, the screw thread 242 may have a pitch that is at least 15-30 times less than a diameter of the pellets (as noted above). In various embodiments, the pitch could be between about 1 mm to about 20 mm, and optionally about 4 mm to about 8 mm. If the pitch varies, as described below, this may correspond to a maximum pitch.

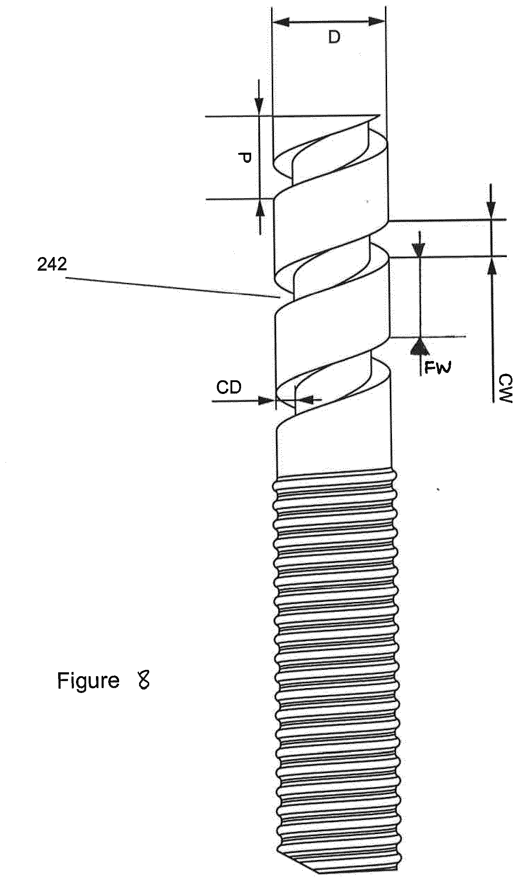

**FIG.** 8 shows schematically an outline of a screw thread 242 and various dimensions that may be associated therewith. "D" represents an outer diameter of the screw, "CD" represents a depth of the feeding channel, "CW" represents a width of the feeding channel, and "P" represents a pitch of the screw thread 242, which may be defined as the distance between adjacent threads. The features of **FIG.** 8 could be applied to any of the aspects and embodiments described herein that include a screw thread for transporting pellets from a chamber for dispensing from the cartridge. The values given for the dimensions may be representative of the dimensions for the entire length of the screw thread 242 and/or screw section 240.

The following table provides some exemplary dimensions (in mm) of the screw thread, with reference to **FIG.** 8 and the dimensions shown therein and described above. In the embodiments in the table the pellet diameter was about 200-300 µm, although the same dimensions could be used for pellets having a larger diameter, for example up to about 900 µm. Typical dimensions (e.g., width or diameter) of the pellets may be between about 150 µm and about 1200 µm (or even 1500 µm), optionally between about 200 µm and about 300 µm, between about 300 µm and about 500 µm, between about 300 µm and about 700 µm, between about 500 µm and about 700 µm, between about 700 µm and about 900 µm or between about 800 µm and about 1100 µm. Values may be provided in terms of a multiple of the diameter of the pellets and these values should be taken as general and not limited to any particular size (or range of sizes) of pellet.

| Screw | Number of screw starts | Diameter [D] | Channel Depth [CD] | Channel Width [CW] | Pitch [P] |
|---|---|---|---|---|---|
| A | 1 | 6 | 1 | 2 | 3 |
| B | 1 | 7 | 2.4 | 3 | 4 |
| C | 1 | 7 | 1.6 | 4 | 5 |
| D | 2 | 6-14 | 1.5-5.5 | 2 | 6 |

The number of screw starts has been found to have an impact on the speed at which pellets are dispensed, wherein a higher number of screw starts naturally leads to a higher output per revolution. Up to this point, it has proved to be beneficial to have a relatively low output ratio in order to maximize the precision of the dispensed pellets, and using either one or two screw starts is seen as beneficial over using, say, three or more.

Looking at the relationship between channel depth/width and pellet size, this may be chosen such that there is room for multiple pellets between the screw and the surfaces of the screw thread. What may be important is that the pellets are allowed to flow freely without negatively interfering with each other, e.g., causing jams or blockages in the flow during a dispensing operation. In some embodiments, therefore, the dimensions are chosen so that there is enough room for at least 2-3 pellets to pass each other in the channel. Having a dosing sequence free from jams or blockages in the flow may be important in reaching high precision and repeatability between doses. Therefore in various embodiments the channel depth and/or width may be at least 2, 3 or 4 times a diameter of the pellets.

For example, for pellet diameters of between about 200-300 µm the channel depth ("CD") and/or channel width ("CW") may be between about 1-2 mm. For pellet diameters between 700 µm and about 900 µm the channel depth and/or channel width may be between about 1.4 mm and about 3.6 mm, and for pellet diameters between about 800 µm and about 1100 µm the channel depth and/or channel width may be between about 1.6 mm and about 4.4 mm.

The pitch ("P") has been found to have a large impact on the precision of the device (i.e., dosing accuracy), as discussed above. A high pitch seems to increase the risk for pellets running through the screw when the device is in an idle state, although a trade-off is present since decreasing the pitch increases the torque required to rotate the rotating member. In various embodiments the pitch may be limited to less than about 15-30 times a diameter of the pellets, and in some cases less than about 10 times a diameter of the pellets. For example, for pellet diameters of between about 200-300 µm the pitch may be about 6 mm, and sometimes less than about 3, 4 or 5 mm.

The pitch may be variable, e.g., the pitch of the screw thread may be variable along the axial length of the screw pump. This variable pitch may be applied to the embodiments described above, for example including a tapered portion, or any of the embodiments described herein (for example, even where a tapered portion is not provided). This feature is seen as advantageous in its own right and, therefore, from an aspect of the invention there is provided a cartridge, screw pump and rotating member as described above (or below), wherein the screw pump comprises one or more screw threads having a variable pitch.

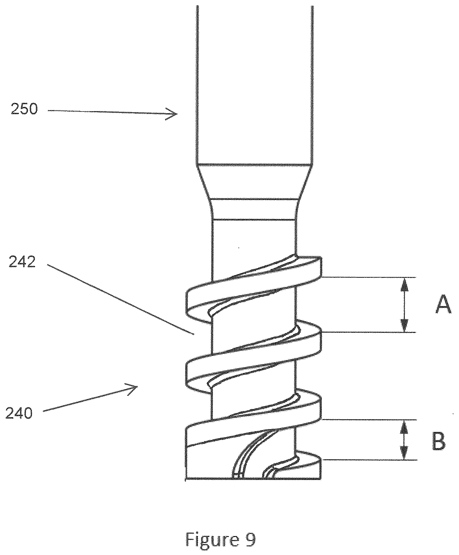

**FIG.** 9 shows an embodiment of a screw thread 242 having a variable pitch, and illustrates a screw thread 242 having a variable pitch, wherein the pitch progressively (e.g., continuously) increases in an axial direction away from the outlet 243. This has been found to improve the way in which pellets are forced through the screw pump, since the pellets may be packed/compressed additionally by the screw pump itself. For example, a first pitch A of the screw thread 242 closer to the inlet of the screw pump may be relatively high or at a maximum value, and a second pitch B of the screw thread 242 closer to the outlet 243 of the screw pump may be relatively low or at a minimum value. The first pitch A may be between about 1.2-2 times the second pitch B, and optionally the first pitch A might be about 1.4-1.6 times the second pitch B.

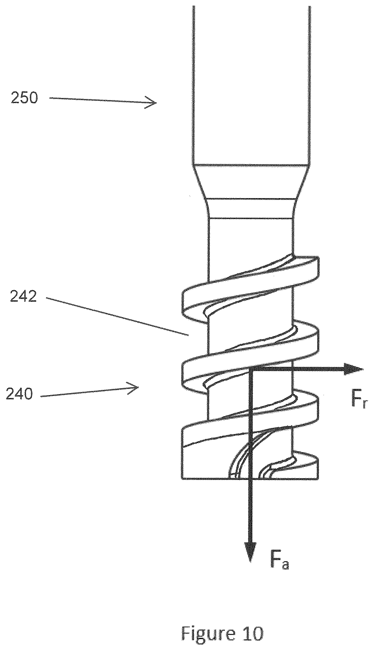

As shown in **FIG.** 10, the force applied to the granules can be seen as a combination of rotational (Fᵣ) and axial (Fₐ) forces. A variable pitch may be desirable for the reasons discussed above. However, although not necessarily essential, it can be beneficial to limit the variance of the pitch across the axial length of the screw pump. For example, having a first pitch A that is greater than 3 times the second pitch B can decrease the flow of pellets into the screw pump, since the rotational force Fᵣ begins to dominate over the axial force Fₐ. A pitch that is too high may also increase the risk of granules running uncontrolled though the screw. This may have a negative effect on the uniformity of doses, as well as the feeding and run-through of pellets through the screw pump. In various embodiments, therefore, the variance of the pitch may be limited such that it does not vary (e.g., increase or decrease) by more than about 3 times an initial value (e.g., a maximum or minimum value) along the axial length of the screw pump. For example, the first pitch A may be no more than 3 times the second pitch B.

Referring back to **FIG.** 8, the "flight width" ("FW") is the thickness of the threads and is a result of choosing pitch and channel width. More specifically, the flight width is equal to the pitch minus the channel width. The flight width has been found to be an important factor in preventing the screw from jamming. With a smaller flight width, the contact area between the outside surface of the screw and the surfaces of the screw thread is decreased, which reduces the risk for small pellets, and/or dust from crushed pellets, getting stuck and causing the screw to stick.

Therefore in various embodiments the flight width may be limited to less than about 3, 5, or 10 times a diameter of the pellets. In particular for pellet diameters of between about 200-300 µm, the flight width may be less than about 1, 2 or 3 mm. For pellets up to about 900 µm, or between about 700 µm and about 900 µm or between about 800 µm and about 1100 µm, the flight width may be limited to less than about 1, 2 or 3 mm, for example about 1 mm.

A low flight width (e.g., less than about 1 mm) has been found to be beneficial for pellets up to about 900 µm due to it providing a more consistent dose. For smaller pellets (i.e., about 200-300 µm) it has been found that dust may be created as they travel through the screw section 240, which dust can become stuck between the outside of the screw section 240 and the exit tube 212. Limiting the flight width to less than about 1, 2 or 3 mm, and especially about 1 mm has been found to minimise this effect for these smaller pellets, in addition to the effect of a more consistent dose for larger pellets as described above.

In various embodiments, the rotating member 250 (e.g., at the screw section 240) will have an outer diameter of 6 mm, and two screw starts, each of height or channel width of about 2 mm, a channel depth of about 1 mm and a pitch of about 6 mm. The pellet diameter in these embodiments may be between 200-900 µm, for example about 200-300 µm.

Each of the parameters of the screw thread has an effect on mass output rate and required driving torque. The pitch may be a set value and may not change as the diameter of the screw increases; however, the effective angle of the threads relative to the pellets does change. If the pitch stays at the same value and the diameter is increased, the pellet screw thread hits the pellets at a decreased angle. This may have an effect on the dispensing rate and required torque. As noted above the pitch may vary along the axial length of the screw pump.

The screw parameters may be adjusted or configured based on the size of the pellets to be dispensed. The screw thread 242 may be at least 1-3 times a largest pellet diameter.

The depth of the screw thread 242 may be between about 1 mm and about 3 mm. Alternatively, the depth of the screw thread 242 may be tailored to the diameter of the pellets, such that the depth of the screw thread 242 is at least the diameter of a pellet. Similarly, the height of the screw thread 242 can range from about 1 mm to about 10 mm, for example about 1 mm to about 4 mm. The screw thread 242 may comprise at least 2 screw starts.

The screw section 240 of the rotating member 250 may comprise a diameter that allows at least 1, 2, 3 or more screw starts to be incorporated into the screw pump. The pitch of each screw thread 242 may be increased accordingly, and/or may vary within each screw thread.

The rotating member 250 may comprise a high stiffness and/or rigid material, for example polycarbonate or polyamide. The diameter of the rotating member 250 can vary from about 3 mm to about 10 mm, for example about 3 mm to about 6 mm. The diameter of the rotating member 250 may be equal to the diameter of the outer surface 241 of the screw section 240, e.g., along its entire length (along the longitudinal axis A).

The screw thread 252 that cooperates with the plunger 230 may run along at least about 80%, about 90% or more of the length of the rotating member 250 within the cartridge 200. The pitch of the screw thread 252 may be chosen so that the plunger 230 consistently applies pressure to the pellets stored within it.

The actuator 300, if provided with an electromechanical motor, may be configured to rotate the rotating member 250 at a rate of between about 0 rpm and about 1000 rpm, optionally between about 50 rpm and about 500 rpm, optionally between about 90 rpm and about 150 rpm.

The device 100 may comprise a cap (e.g., described below) that fits over an end of the cartridge 200 at the second end 104 of the device 100. The cap may comprise an interference fit with an outer surface of the cartridge 200. Means may be provided for preventing the pellets from falling out of the exit tube 212 (or cartridge 200) unintentionally. The cap may comprise a marker that is configured to line up with a cooperating groove located on the cartridge 200, such that the marker lines up with a first end of the groove prior to twisting of the cap, moves along the groove during the twisting, and then reaches the end of the groove once a required or predetermined dose has been dispensed.

In various embodiments, the actuator 300 may be configured to rotate the rotating member 250 in a reverse direction after completing a dose. This can be useful in drawing pellets back into the chamber 220, which can reduce pellet loss (which may be due, in part, to pellet run-through). Such a change in rotation direction could also be useful to move a plug into and out of contact with the exit tube 212 to seal the cartridge 200. This can be used to provide a seal (e.g., a hermetic seal as described elsewhere herein), and also avoid pellet loss. In various embodiments, the change in rotation can also be used to break the drive mechanism at the end of the life of the cartridge 200, to prevent refilling and re-use of the cartridge 200, e.g., by a user or third party. Various embodiments may include a latch that permanently locks the rotation of the rotating member 250 if its rotation is reversed from the direction required to drive the pellets.

Various embodiments of the invention will now be described, and the features described below may be combined with any of the embodiments described above, to the extent that they are compatible therewith. Similar features are indicated with similar reference numerals.

In the figures associated with the following the screw thread of the screw pump may not be depicted as described above, for example displaced from the tapered portion or tapering with the tapered portion, or having a variable pitch. However, the features described may still be combinable with the above described aspects and embodiments. In other words, the embodiments described below may be adapted such that the screw thread of the screw pump corresponds to a screw thread as described above and in accordance with the invention. For example, displaced from the tapered portion or tapering with the tapered portion, or having a variable pitch. Similarly, the figures may not show a tapered portion but it should be appreciated that one may be provided where appropriate.

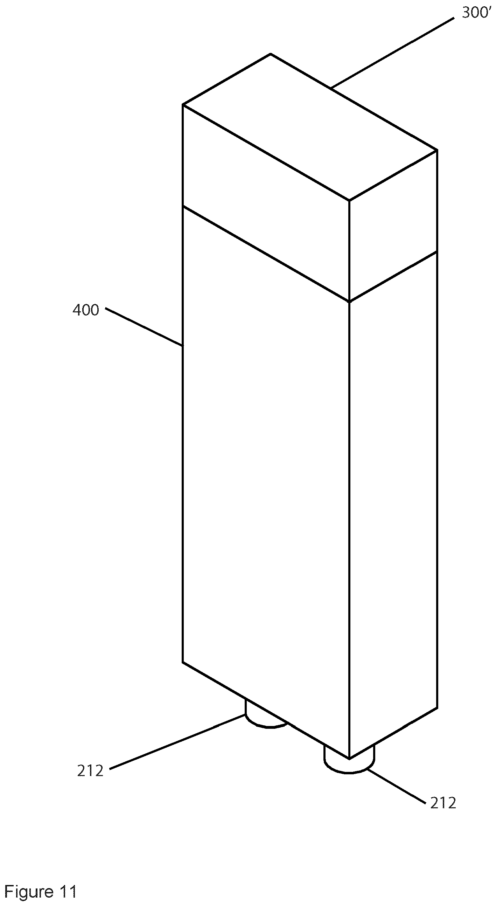

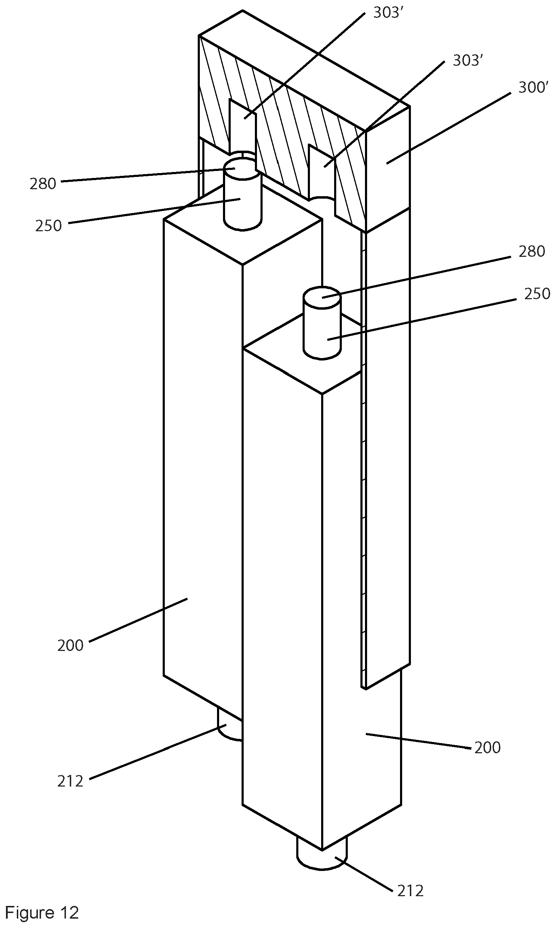

**FIGS.** 11 and 12 show an embodiment including two cartridges 200 that are positioned side-by-side within a housing 400. The two cartridges 200 abut and may be operated by a common actuator 300'. The actuator 300' may comprise dual connecting portions 303' with each connecting portion 303' being configured to drive a respective connecting portion 280 of each respective rotating member 250 of each cartridge 200, and in a similar manner to that described above in respect of the single-cartridge actuator 300.

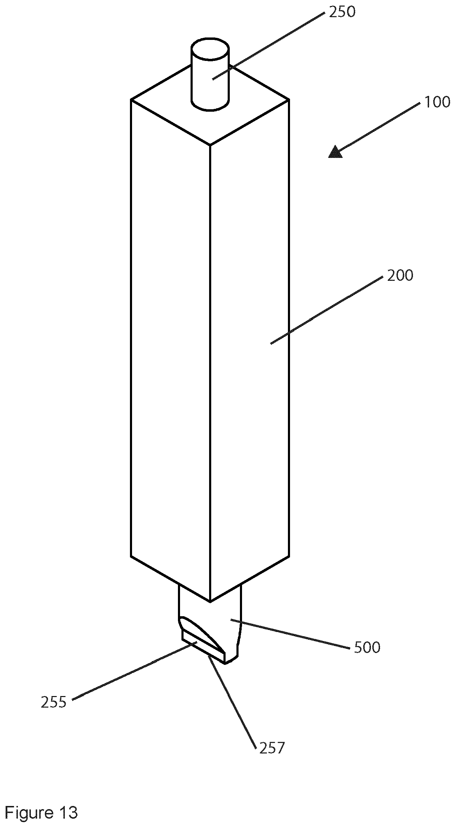

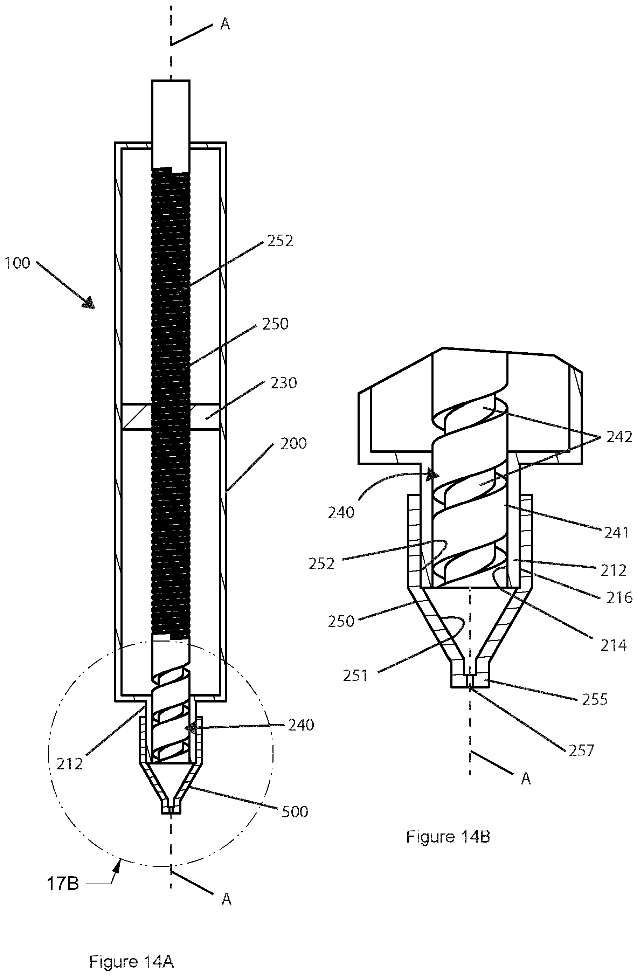

**FIGS.** 13, 14A and 14B show an embodiment incorporating a first valve located over the exit tube 212 of the cartridge 200.

The first valve 500 comprises a first surface 252 configured to contact an outer surface 216 of the exit tube 212 in an interference or friction fit type manner. The first valve 500 further comprises a funnel portion comprising a second surface 251 that is frustoconical, so as to taper from the first surface 252 to an outlet portion 255. The funnel portion is configured to receive pellets from the screw section 240, and specifically from the screw thread 242 thereof. The outlet portion 255 comprises an outlet 257 that is configured to receive pellets from the frustoconical portion and dispensed these to a user. The outlet portion 255 and/or the outlet 257 may be elongated, as shown in **FIG.** 13, and the width of the outlet 257 (i.e., its smaller width, as shown in **FIG.** 14B) may be adapted to the size of the pellets to be dispensed. For example, this width may be less than 1.5 times the width or diameter of a pellet.

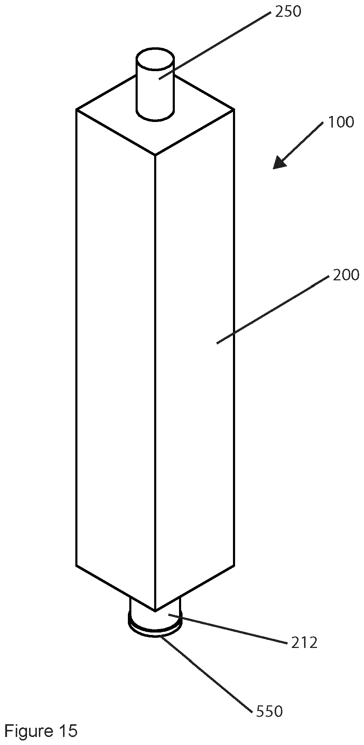

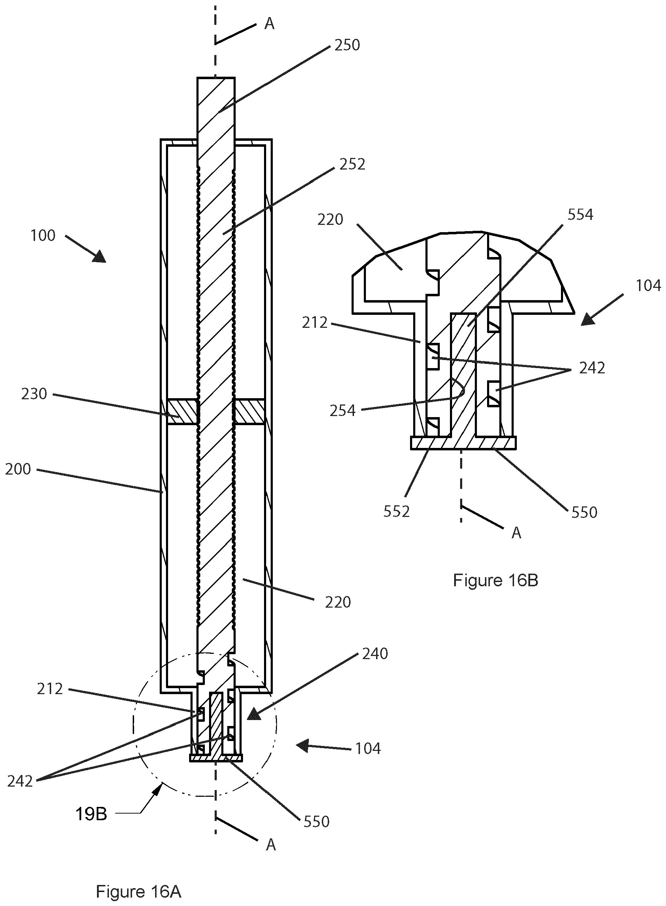

**FIGS.** 15, 16A and 16B show an embodiment incorporating a second valve 550 located over the exit tube 212 of the cartridge 200 in the form of a plug 550. The plug 550 may be configured to contact an end of the exit tube 212 facing away from the chamber 220. In various embodiments, the plug 550 is configured to insert into a cavity 254 formed at the second, dispensing end 104 of the rotating member 250 (i.e., comprising the screw portion 240). The plug 550 comprises a base portion 552 and an elongate portion 554 that extends from a centre of the base portion 552 into the cavity 254 of the rotating member 250. The base portion 552 may be configured to rest (e.g., provide a seal) against the exit tube 212 to retain and, e.g., hermetically seal the pellets within the cartridge 200, for example prior to use or (in some embodiments) during use.

The plug 550 may be in the form of an "umbrella valve". That is, at least the base portion 552 of the plug 550 may be resilient, e.g., a rubber membrane, wherein the outer rim of the base portion 552 is configured to flex open as the pellets are pushed out of the screw pump in use, and then spring back when the screw pump is not turning, so as to stop pellets falling out and to help seal the cartridge 200. The elongate portion 554 of the plug 550 may not substantially move from its position within the cavity 254 of the rotating member 250.

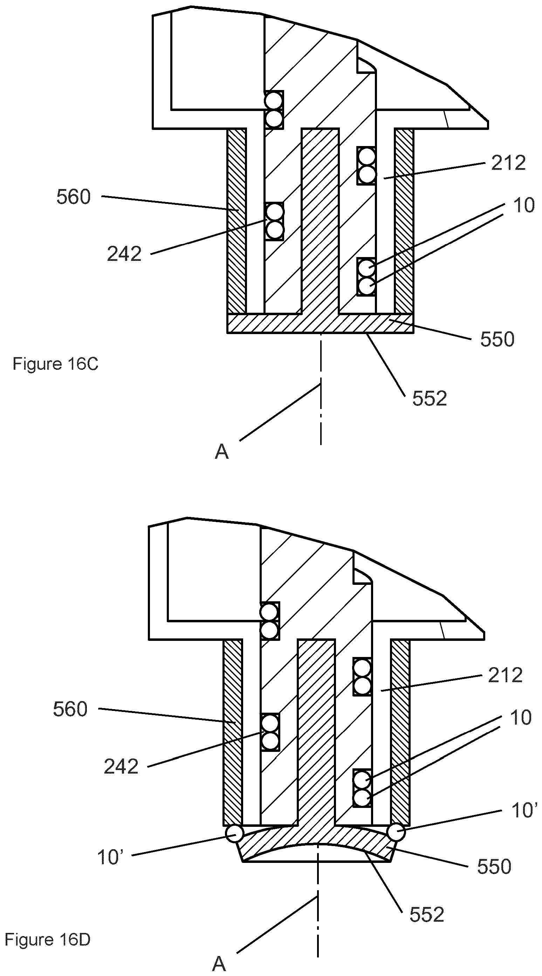

**FIGS.** 16C-E show a modification of the umbrella valve concept that may be applied to the embodiment shown in **FIGS.** 16A and 16B. In this embodiment, the device 100 comprises a sliding member 560 that is located concentrically around the exit tube 212 and configured to slide axially relative thereto (i.e., along axis A). The base portion 552 of the plug 550 extends in a radial direction (relative to axis A) passed the radial extent of the exit tube 212 and at least partially into the line of travel of the sliding member 560. This is shown in **FIG.** 16C.

Upon rotation of the rotating member 250 (i.e., comprising the screw portion 240 and screw thread 242) pellets 10 will be forced downwards through the screw thread 242 and at least some pellets 10' will become trapped between the base portion 552 of the resilient plug 550 and the end of the exit tube 212 or an end of the sliding member 560, as indicated schematically in **FIG.** 16D.

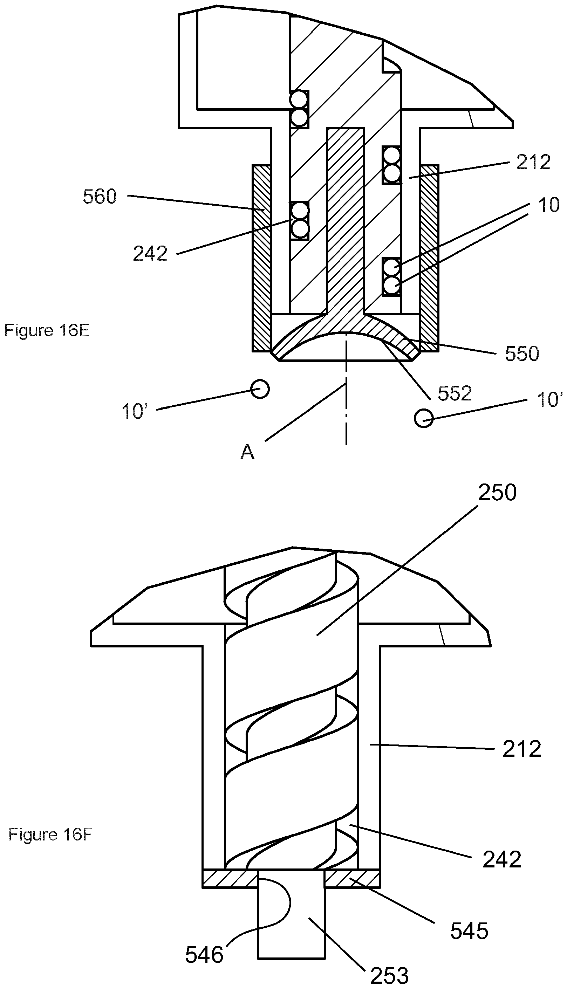

In order to dispense pellets from the device 100, a user may slide the sliding member 560 along the axis A, which causes the base portion 552 of the resilient plug 550 to flex such that the pellets 10' that were trapped between the base portion 552 of the plug 550 are released and dispensed from the device 100. This is indicated schematically in **FIG.** 16E.

Once pellets are dispensed from the device 100 a user may slide the sliding member 560 back into place, at which point the valve has returned to its original position (as shown in **FIG.** 16C), which prevents pellets from inadvertently being dispensed out of the exit tube 212. In various embodiments, the sliding member 560 may be biased towards this original position by the resilience of the base portion 552 of the plug 550. For example, a suitable resilient member may bias the sliding member 560 to this position, or an electromechanical device such as a solenoid, relay or other actuator.

It will be appreciated that during rotation of the rotating member 250 pellets will continuously be dispensed out of the exit tube 212, past the base portion 552 of the resilient plug 550. The purpose of the sliding member 560 is to remove any pellets that, after this dispensing operation, are left between the resilient plug 550 and either the base portion 552 of the plug 550 or an end of the sliding member 560 as described above. In this manner, the sliding member 560 is configured to end the dispensing operation and prevent stray pellets from falling out of the device 100 outside of any dispensing operation.

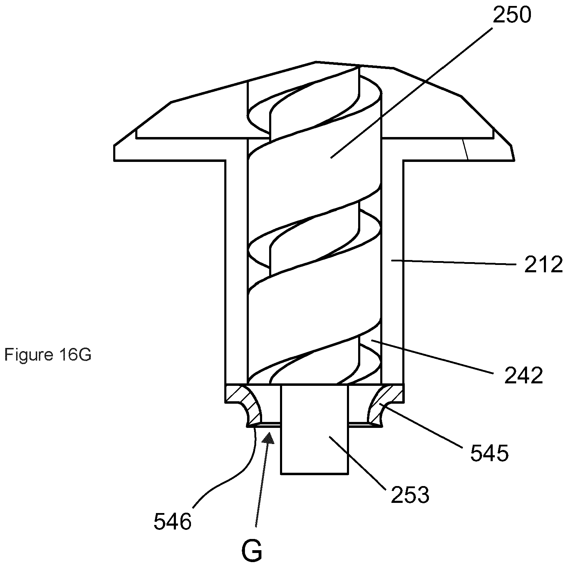

**FIGS.** 16F and 16G illustrate a further embodiment in which a valve in the form of a deformable material or membrane 545 is placed over the dispensing end of the exit tube 212. The deformable material 545 may be substantially resilient, and may comprise an aperture 546 through which a pin 253 extends, which pin 253 extends from an end of the rotating member 250. In the non-operational or resting position, as shown in **FIG.** 16F, the outer surface of the pin 253 contacts the inner surface of the aperture 546 to close the end of the exit tube 212 and prevent pellets from being dispensed.

In various embodiments the pin 253 may be about 1.5 mm in length (i.e., along the longitudinal axis of the rotating member 250) and have a diameter of about 2.5 mm, and the deformable material 545 may have a thickness of about 1 mm, with the aperture having a width or diameter of about 2 or 2.5 mm. The length of the deformable material 545 (in the direction of the longitudinal axis of the rotating member 250) is less than the length of the pin 253, and may be less than about 80% of the length of the pin 253. The deformable material 545 may comprise a thermoplastic elastomer ("TPE") or polybutylene terephthalate ("PBT") and/or may have a hardness of less than about less than about 100, 80, 70, 60 or even 50 shore. The shore hardness test may be conducted at shore 00 or shore A. Optionally the hardness may be between about 30 shore and about 50 shore, conducted at shore 00 or shore A. The pin 253 may be substantially rigid. The deformable material 545 may be attached to the exit tube 212 in any suitable manner, for example by adhesive.

Upon rotation of the rotating member 250 pellets will be urged towards the end of the exit tube 212 for dispensing from the device 100, and upon meeting the deformable material 545 in its resting position (as shown in **FIG.** 16F) the pellets will be forced against the deformable material 545 and cause it to deform, as shown in **FIG.** 16G, creating a gap G between the deformable material 545 and the pin 253, through which pellets can be dispensed. At the end of the dispensing operation, once the rotating member 250 has stopped rotating, pellets will no longer be urged against the deformable material 545 and the deformable material 545 will spring back into its resting position as shown in **FIG.** 16F in which the end of the exit tube 212 is closed.

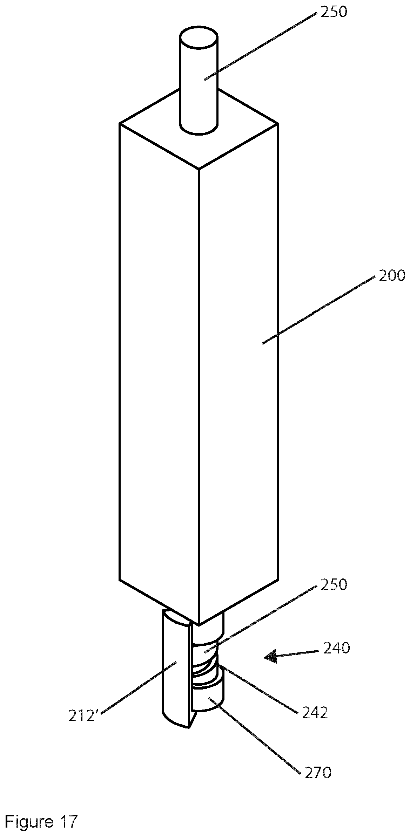

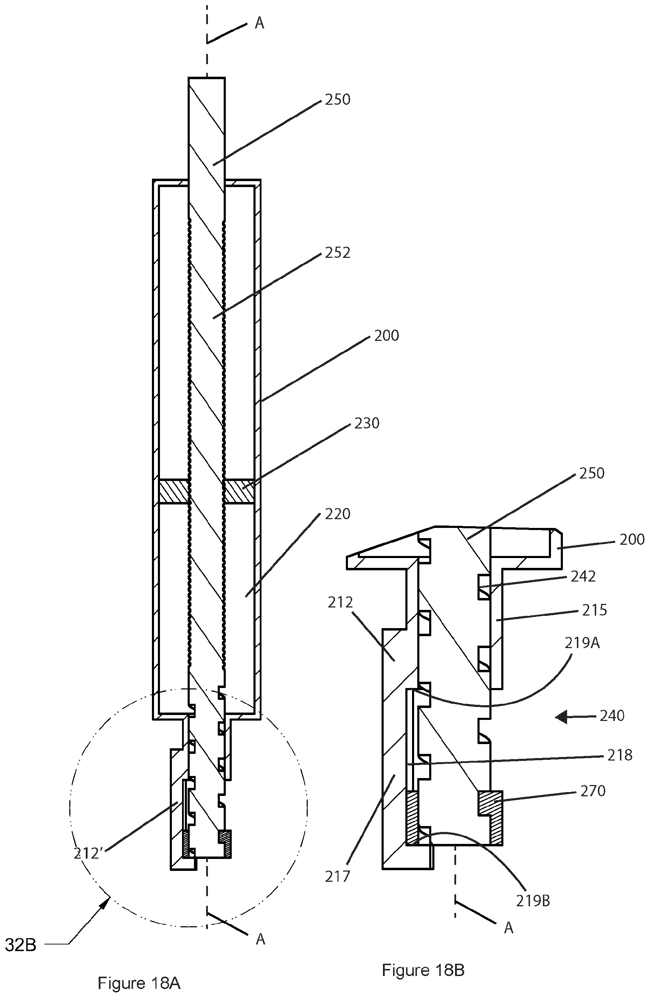

**FIGS.** 17, 18A and 18B show an embodiment incorporating a modified exit tube 212', the features of which may be incorporated into any of the other embodiments described herein involving an exit tube. In this embodiment, the exit tube 212' is modified so as to cooperate with a movable component that is configured to move between a first position, in which the movable component prevents pellets being dispensed or moving out of the screw pump, and a second position in which pellets are permitted to be dispensed from the screw pump.

More specifically, the movable component in the illustrated embodiment is in the form of a nut 270 that is configured to travel along the screw thread 242 of the screw section 240. The exit tube 212 comprises a substantially cylindrical portion 215 and a flange 217 extending from the cylindrical portion 215 in the direction of the longitudinal axis A of the rotating member 250. The flange 217 comprises a track 218 along which the nut 270 travels in use. The flange 217 further comprises opposed shoulder portions 219A, 219B located at either end of the track 218 and configured to provide a stop for the nut 270.

The nut 270 is configured to move along the longitudinal axis A of the rotating member 250 (which is also the axis of the screw thread 242) upon rotation of the rotating member (and screw section 240). The nut 270, by virtue of its association with the screw thread 242 is configured to block the screw thread and prevent pellets from moving down the screw thread 242 past its location thereon. Furthermore, when the nut 270 meets a first 219A of the shoulder portions, the nut 270 forms a seal against the cylindrical portion 215 of the exit tube 212, which means that no portion of the screw thread 242 is exposed. As such, pellets are unable to leave the screw thread 242 and be dispensed from the device.

Upon rotation of the rotating member 250 in a first rotational direction, the nut 270 is configured to move along the track 218 away from the first shoulder portion 219A, exposing the screw thread 242 so that pellets can move down the screw thread 242 and be dispensed from the cartridge 200. After a certain amount of rotation of the rotating member 250, the nut 270 will contact the second shoulder portion 219B, which prevents the nut 270 from moving any further (and also, conveniently, prevents further rotation of the rotating member 250). At this position (which is shown in **FIG.** 18B) the screw pump formed by the screw thread 242 and exit tube 212'will have dispensed a certain volume (e.g., a predetermined or predefined amount) of pellets.

Upon rotation of the rotating member 250 in a second rotational direction (which is opposite to the first rotational direction), the nut 270 is configured to move along the track 218 away from the second shoulder portion 219B and ultimately contact the first shoulder portion 219A so as to seal against the cylindrical portion 215 of the exit tube 212 and prevent pellets from being dispensed from the device.

The nut 270 may move linearly (and axially) along the longitudinal axis A of the screw thread 242. The nut 270 may be constrained rotationally (i.e., so that it does not rotate with the rotating member 250) through a friction fit between the nut 270 and the flange 217 that extends downwards from the cylindrical portion 215 of the exit tube 212'.

Upon delivery of the required dose (which may not correspond to the nut 270 travelling all the way along the track 218), the rotating member 250 may be rotated in the opposite direction as discussed above, which draws pellets left in the screw thread 242 back into the chamber 220 and simultaneously draws the nut 270 vertically until it is back in its resting position, in contact with the first shoulder portion 219A of the exit tube 212'. As discussed above this contact seals against the cylindrical portion 215 of the exit tube 212', preventing pellets from falling out.

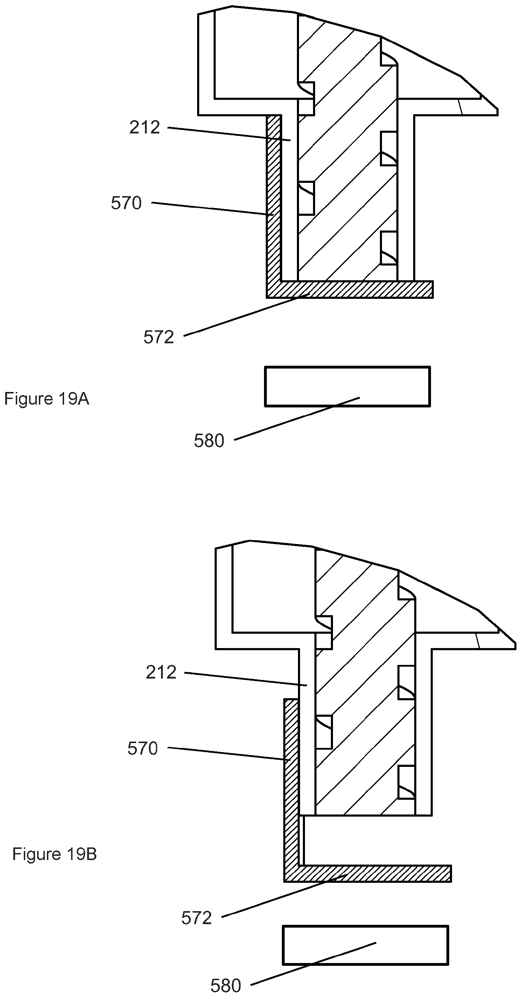

**FIGS.** 19A and 19B show an embodiment that includes a movable component 570 that may be located over an outlet end of the exit tube 212. The movable component 570 may be included in the embodiment shown in **FIGS.** 16A and 16B, and may be provided additionally to, or a replacement for the valve 550 (and optional sliding member 560) disclosed in connection with this embodiment.

In this embodiment the movable component 570 may comprise a spring-loaded plate 572 configured to enclose the outlet end of the exit tube 212. A suitable resilient member (not shown) may be configured to bias the movable component 570 to its position shown in **FIG.** 19A. This can assist in adding moisture protection and preventing pellets from falling out of the exit tube 212 inadvertently. In some embodiments the plate 572 may be configured to rest (e.g., hermetically seal) against the exit tube 212. The plate 572 may itself be made from a resilient material, for example the plate 572 may be made from an elastomer, or comprise an elastomer coating. This will further assist in sealing the exit tube 212 and preventing pellets from falling out thereof.

In one particular embodiment, the movable component 570 is combined with an electronic relay 580 comprising an electromagnet, which is shown schematically and is configured to move the movable component 570 from its resting position shown in **FIG.** 19A to its open position shown in **FIG.** 19B. In the resting position the electromagnet may be switched off so that the plate 572 is biased against the end of the exit tube 212 to seal it and prevent pellets from falling out. In the open position the electromagnet may be switched on so that the plate 572 is pulled towards the electronic relay 580, which allows pellets to be dispensed from the exit tube 212 during a dispensing operation. In this embodiment, the movable component 570 would need to comprise a magnetic component so that the electromagnet of the electronic relay 580 can adequately move it away from its resting position.

In various other embodiments, the movable component 570 may simply be spring-loaded against the action of a user. For example, an electronic relay 580 may not be provided, and the movable component 570 may be moved from its resting position to its open position by a user. Other types of electromechanical device may be used, such as a solenoid or other actuator.

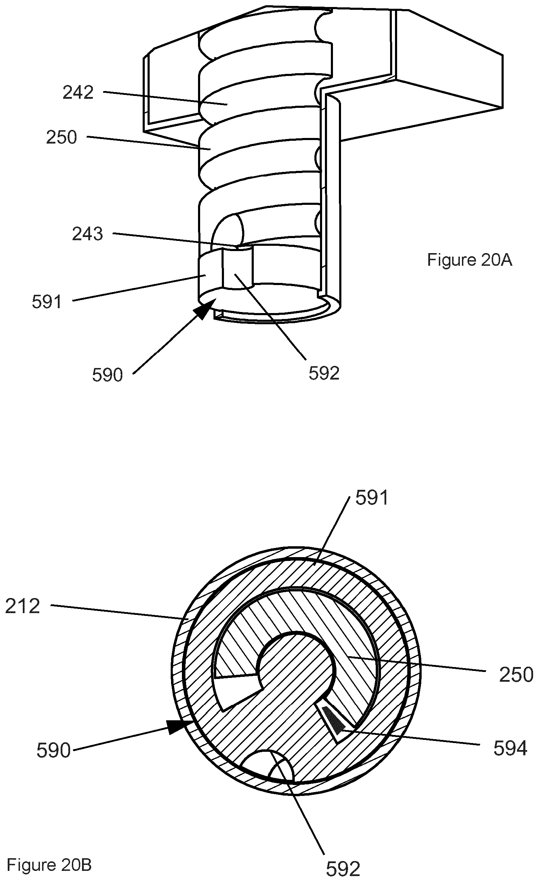

**FIGS.** 20A and 20B show an embodiment that can be seen as a modification of the embodiment of **FIGS.** 16A and 16B, wherein the valve 550 is replaced by a valve 590 that extends in a similar manner from the end of the rotating member 250. The valve 590 of this embodiment comprises a disc 591 having a notch 592 that is configured to align with an outlet 243 of the screw thread 242, wherein upon alignment of the notch 592 and the outlet 243 pellets are configured to be dispensed from the device 100. The disc 591 is rotatable between a first position in which the notch 592 is aligned with the outlet 243 (as shown in **FIG.** 20A) and a second position in which the notch 592 moves out of alignment with the outlet 243.

In various embodiments, as shown in **FIG.** 20B the valve 590 may comprise a resilient member 594 that is configured to bias the disc 591 towards its second position. The disc 591 may be configured to rotate with the rotating member 250 due to a friction fit between these two components. When the rotating member 250 starts to rotate to begin a dispensing operation, the disc 591 may rotate with it and move to its first position to align the notch 592 with the outlet 243 and permit dispensing of pellets. Once the rotating member 250 finishes rotating to end the dispensing operation, the resilient member 594 may bias and move the disc 591 back to its second, resting position.

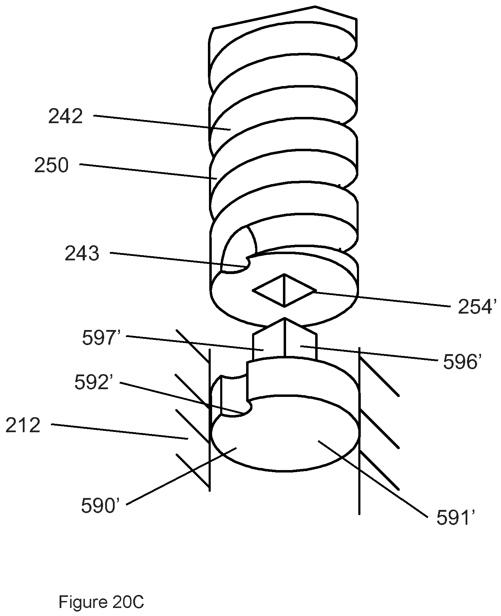

A slight modification of this type of valve is shown in **FIG.** 20C, which shows a valve 590' in the form of a resilient member (e.g., a rubber member). The resilient member 590' comprises a notch 592' that has the same function as that described in respect of **FIGS.** 20A and 20B, namely that the notch 592' is configured to align with an outlet 243 of the screw thread 242 to permit the dispensing of pellets during a dispensing operation. In this embodiment the resilient member 590' is a single piece and comprises a disc portion 591' having a projection 596' that extends from the disc portion 591' towards the rotating member 250 in use. The rotating member 250, in this embodiment, comprises an aperture 254' formed in an end thereof, wherein the projection 596' of the resilient member 590' is inserted into the aperture 254'. The projection 596' of the resilient member 590' (e.g., a crown 597' thereof) has a friction fit with an interior surface of the aperture 254'. The disc portion 591' may fit within and have a friction fit with the exit tube 212 (in this embodiment the exit tube 212 may extend past the resilient member 590').

During a dispensing operation, the rotating member 250 may be rotated and this will cause the rotating member 250 to rotate relative to the disc portion 591' of the resilient member 590' so as to align the notch 592' of the disc portion 591' with the outlet 243 of the screw thread 242. During this operation the projection 596' of the resilient member 590' will flex relative to the disc portion 591' until the notch 592' is aligned, and then the entire resilient member 590' will rotate with the rotating member 250 with the notch 592' remaining aligned to the outlet 243. When the dispensing operation finishes and the rotation ceases, the resilience of the resilient member 590' will cause the disc portion 591' to rotate relative to the rotating member 250 (and the projection 596') so that the notch 592' moves out of alignment with the outlet 243.

The first valve 500 and the second valve 550 (and the modified exit tube 212', and valves 590, 590') may be configured to help prevent pellets located within the screw thread 242 from falling out during use. The device 100 may be configured such that, in order to dispense pellets through the first valve 500 or the second valve 550, a user must rotate the rotating member 250 to force pellets along the screw thread 242 and provide a force against the first valve 500 or the second valve 550, such that pellets may be dispensed through either valve. In some situations a valve may not be necessary (but may still be included), for example the pellets themselves may be retained in the screw thread 242 by friction, or a cap or cover may be provided over the outlet of the cartridge (e.g., the exit tube).

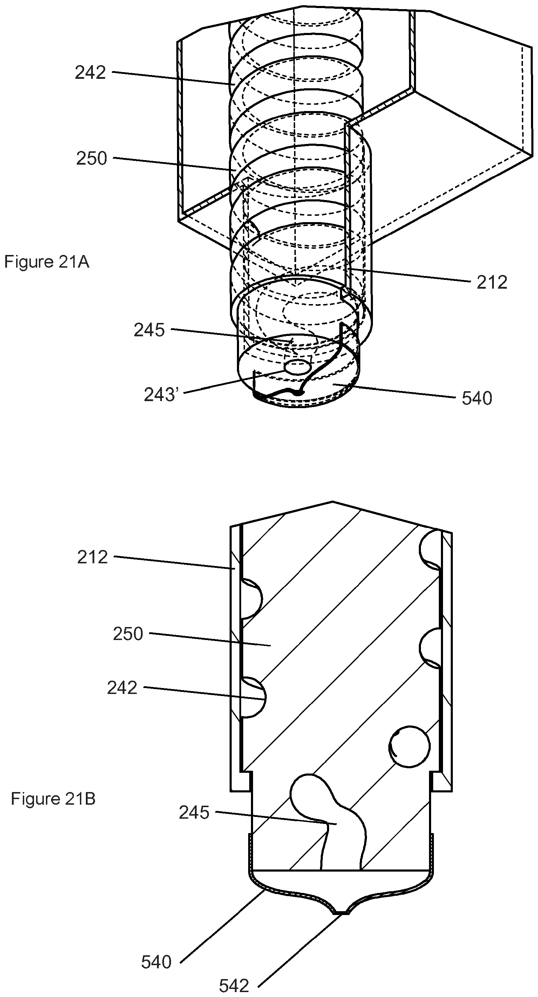

In various embodiments, as shown in **FIG.** 21A the rotating member 250 may be modified such that the screw thread 242 communicates with an internal passage 245 configured to receive pellets from the screw thread 242, which then travel through the passage for dispensing out of an outlet 243' located in a bottom surface of the rotating member 250. In a refinement, as shown in **FIG.** 21B, a resilient (e.g., rubber) cap 540 may be placed over the end of the rotating member 250 that is configured to prevent pellets from being dispensed when the device 100 is not operating. The cap 540 may comprise a resilient opening 542 that is aligned with the outlet 243', but is biased to a substantially closed position that prevents pellets from passing through. Upon rotating of the rotating member 250 pellets will be forced out of the outlet 243' and towards the opening 542, which is configured to open in an elastic manner as a result and permit dispensing of pellets.

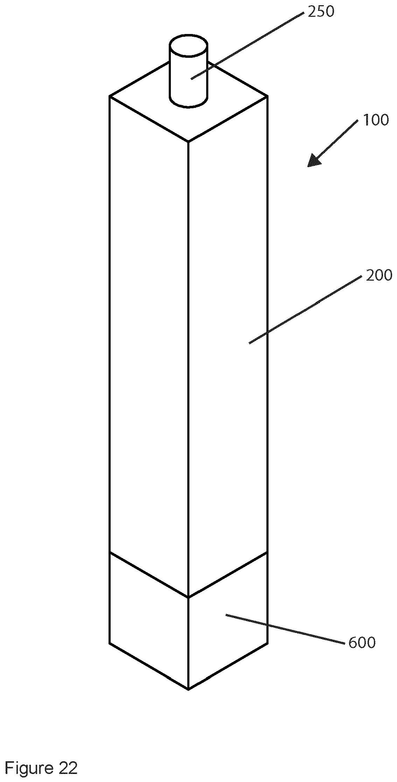

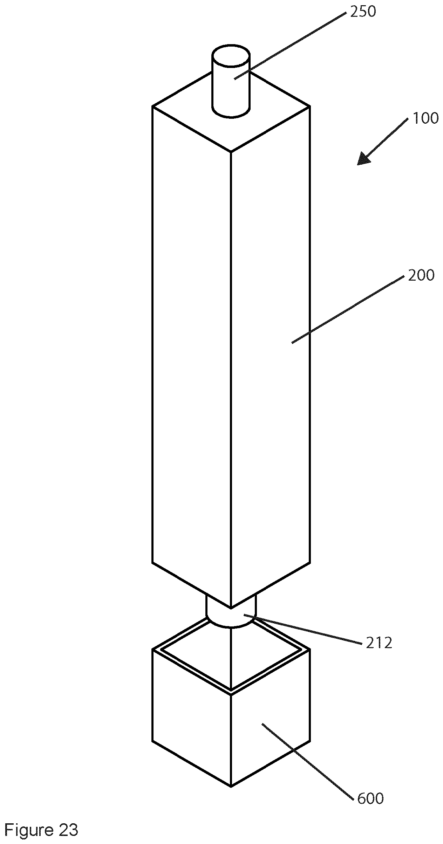

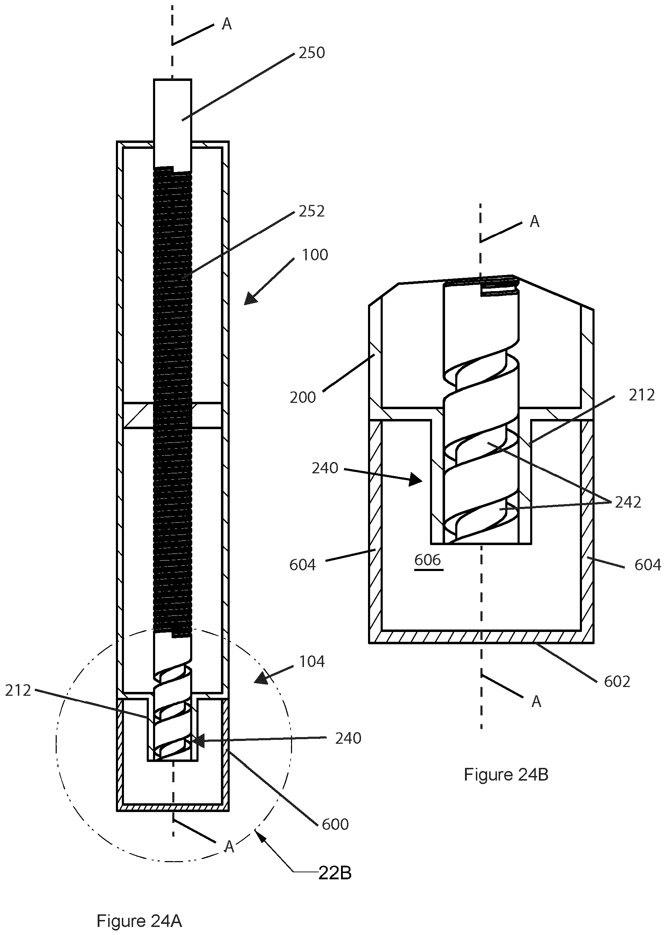

**FIGS.** 22, 23, 24A and 24B show the device 100 comprising a cap 600 that is configured to connect to the cartridge 200 at the second, dispensing end 104 thereof so as to cover the exit tube 212. The cap 600 may be configured to connect to the cartridge 200 by any suitable manner, for example an interference fit, magnetic latch, clip fastener or screw connection. The cap 600 comprises a base portion 602 and one or more side portions 604 extending from either end of the base portion 602. Each of the side portions 604 connects to the cartridge 200 to optionally provide a seal (e.g., a hermetic seal) between the cap 600 and the chamber 200. A chamber 606 may be formed between the cartridge 200 and the cap 600.

The cap 600 may be used to provide a collection cup for pellets (e.g., a dispensed dose may be held in chamber 606) and/or to provide a seal (e.g., a hermetic seal) prior to and during use. The cap 600 may be combined with either the first valve 500 or second valve 550 described above.

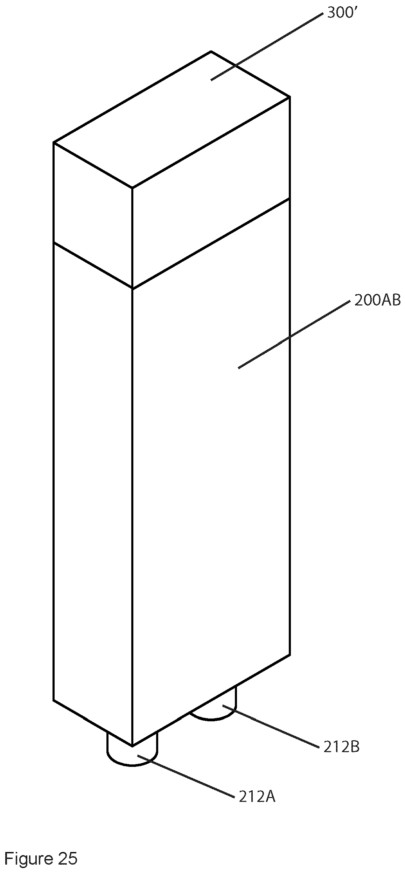

**FIGS.** 25 to 26 show an embodiment of an alternative cartridge 200AB that is similar to the dual cartridge embodiment of **FIGS.** 11 and 12, except that the two cartridges 200 are combined into a single unit.

The single cartridge 200AB comprises a first set of components including a first rotating member 250A extending through a first chamber 220A, the first rotating member 250A comprising a first screw thread 252A and a first screw portion 240A that extends into a first exit tube 212A, as well as a first plunger 230A that moves down the first screw thread 252A in use in a similar manner as described above in respect of the single cartridge 200.

The first screw portion 240A of the first set of components comprises a screw thread 242A that extends into the exit member 212A from the chamber 220A, such that, upon rotation of the first rotating member 250A pellets are dispensed out of the first exit tube 212A via the screw thread 242A in a similar manner as described above in respect of the single cartridge 200.

The single cartridge 200AB comprises a second set of components including a second rotating member 250B extending through a second chamber 220B, the second rotating member 250B comprising a screw thread 252B and a second screw portion 240B that extends into a second exit tube 212B, as well as a second plunger 230B that moves down the second screw thread 252B in use in a similar manner as described above in respect of the cartridge 200.

The second screw portion 240B of the second set of components comprises a screw thread 242B that extends into the exit member 212B from the chamber 220B, such that, upon rotation of the second rotating member 250B pellets are dispensed out of the second exit tube 212B via the screw thread 242B in a similar manner as described above in respect of the single cartridge 200.

The first set of components and the second set of components may be configured differently, such that, for example, the various screw threads 242A, 252A, 242B, 252B may be configured such that the first set of components is configured to dispense pellets at a faster rate than the second set of components. Also the different chambers 220A and 220B may be configured for use with pellets of different sizes. For example, the actuator 300' may be configured such that each separate rotating member 250A, 250B is driven by a different motor or mechanical control, wherein the different motors or mechanical controls are configured to run at different rotational speeds.

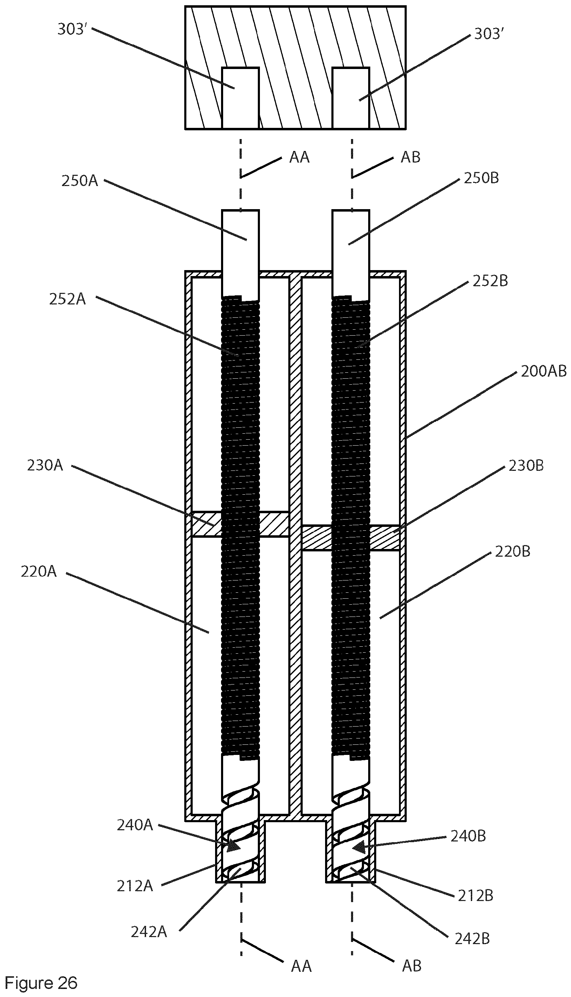

As shown in **FIG.** 26, the first rotating member 250A is configured to rotate about a first axis AA, and the second rotating member 250B is configured to rotate about a second axis AB. In various embodiments, the first axis AA and the second axis AB may be parallel with one another.

The two rotating members 250A and 250B may be operated by a common actuator 300'. The actuator 300' may be similar to that described above in respect of **FIGS.** 11 and 12, comprising dual connecting portions 303' with each connecting portion 303' being configured to drive a respective rotating member 250A, 250B, and in a similar manner to that described above in respect of the single-cartridge actuator 300.

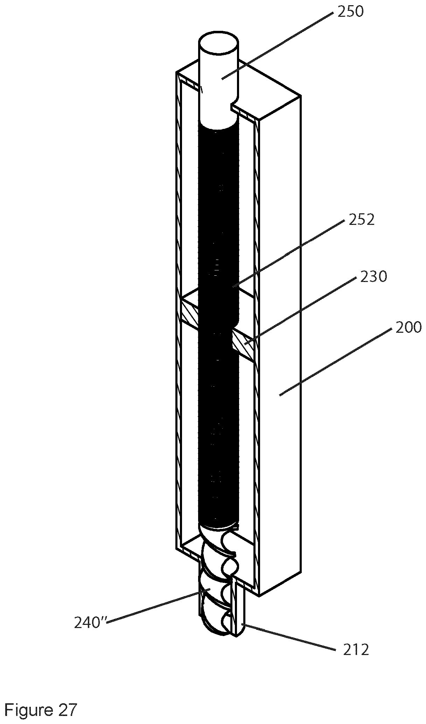

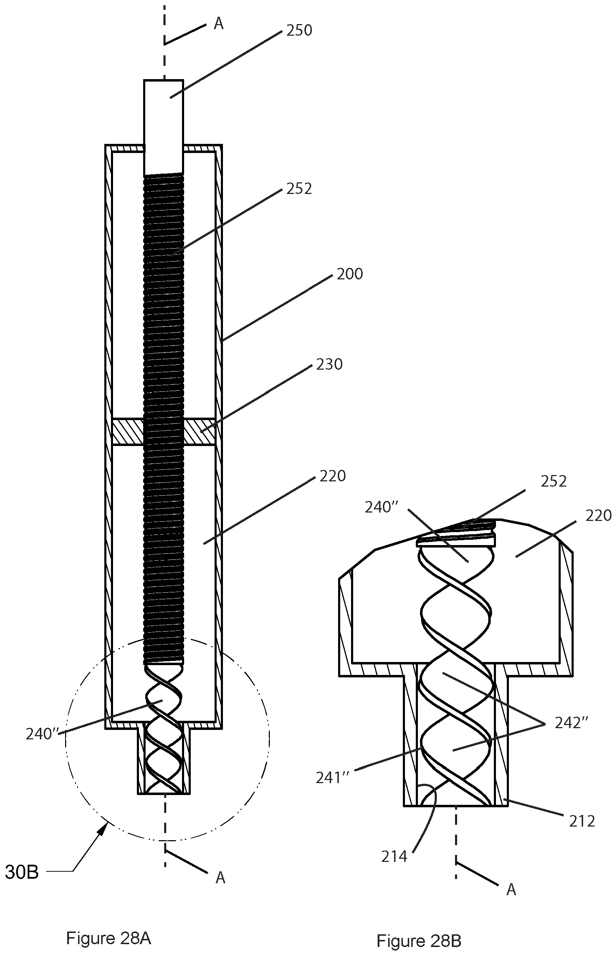

**FIGS.** 27, 28A and 28B show an embodiment of a cartridge 200 wherein the screw section 240 of the rotating member 250 is replaced by a screw section 240" in the form of a 'twisted plate' arrangement that maximises the volume of the screw thread 242" thereof, and minimises a friction impact of the screw section onto the pellets. The screw section 240"of this embodiment is formed by a plate that has been twisted multiple times to create directly opposing screw starts that extend along the entire length of the screw thread 242". This is in contrast to, for example, embodiments in which the screw thread is cut away from the circumferential surface of the rotating member, as shown in the previously described embodiments.

The screw section 240"may connect directly to the screw thread 252 of the rotating member 250, and extend from a position within the chamber 220 into the exit tube 212 in a similar manner to the screw section 240 of the previously described embodiments. The width of the screw section 240"as defined by its outer helical surface 241 "may be substantially equal to the width of the inner cylindrical surface 214 of the exit tube 212. That is, the surfaces of the screw section 240" and the inner cylindrical surface 214 of the exit tube 212 may substantially contact each other or abut (e.g., continuously or intermittently), but not to the extent that they have an interference or friction fit relative to each other, to ensure that they can move smoothly past each another and ensure reliable dispensing.

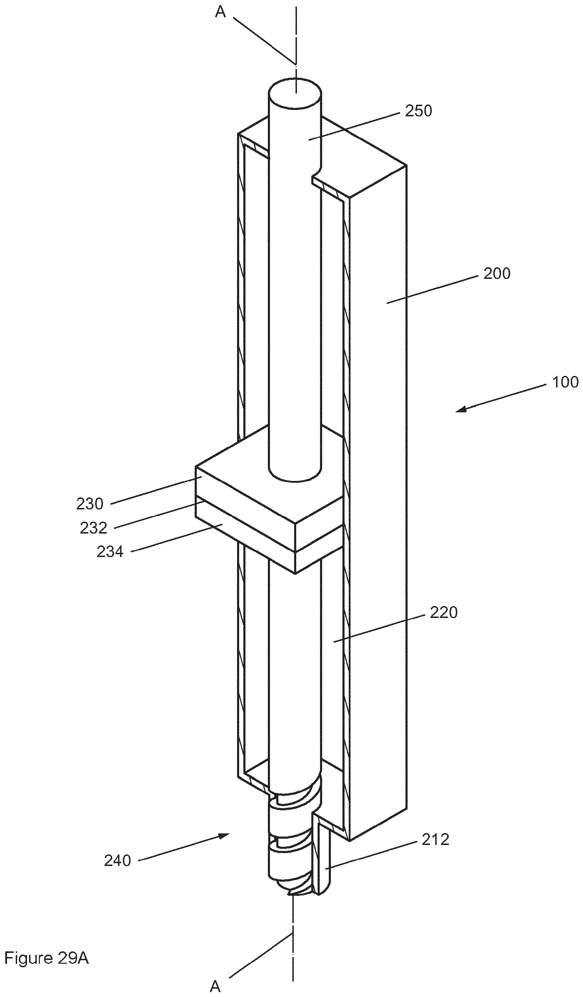

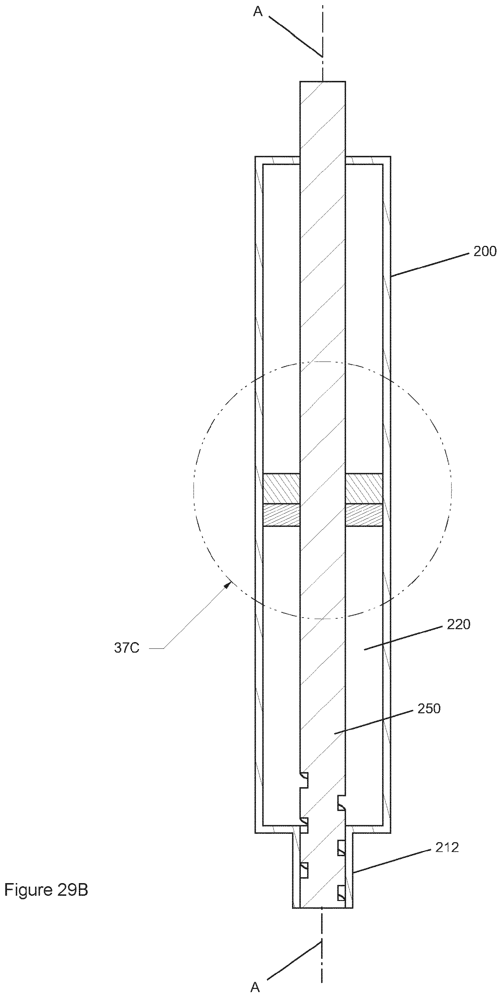

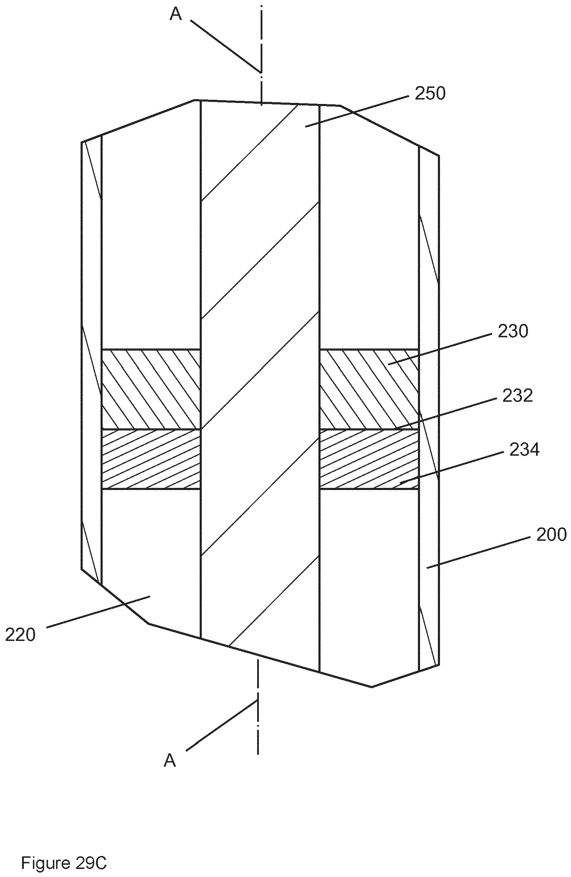

**FIGS.** 29A, 29B and 29C show an embodiment of a device 100 in which the plunger 230 is accompanied by a deformable material 234 that is positioned on the radially extending surface 232 of the plunger 230. In various embodiments the deformable material 234 may be a foam or sponge. The function of the deformable material 234 is to assist in pressing pellets towards the dispensing end of the device 100 (i.e., into the screw section 240). In particular, the deformable material 234 may provide an efficient method in which to ensure the small pellets contained within the chamber 220 are moved towards the dispensing end, especially from the inner walls of the chamber 220.

In various embodiments the plunger 230 may extend radially (relative to axis A) to a distance that is slightly less than the radial distance to the inner walls of the chamber 220, to avoid friction between the plunger 230 and the walls of the cartridge 200. However, in these embodiments the deformable material 234 may extend radially to a distance that is equal to the radial distance to the inner walls of the chamber 220 so that the deformable material 234, rather than the plunger 230, ensures that pellets are moved from the inner walls of the chamber 220 towards the dispensing end and cannot pass between the plunger 230 and the walls of the cartridge 200. The deformable material 234 may be sized so that it is partially deformed upon being placed in position as shown in **FIGS.** 29A-C, which means that it will press against the walls of the cartridge 200 in use to maximise this effect.

The deformable material 234 may be press fitted between the rotating member 250 and the cartridge 200, and not attached to the plunger 230 (e.g., by adhesive). In use, the plunger will move along the axis A as described herein, contact the deformable material 234 and move it along the axis A as well. Alternatively, the deformable material 234 may be secured to the plunger 230 by any suitable means, for example adhesive.

The deformable material 234 may be included in any of the aspects or embodiments included herein that incorporate a plunger 230, and is not limited to the embodiment shown in **FIG.** 29A-C (which are merely provided to illustrate this feature). For example, the deformable material 234 could be provided in embodiments in which the plunger 230 moves along a screw thread 252, and in these embodiments and axial thickness of the deformable material 234 may be at least twice a pitch of the screw thread 252 in order to ensure that few or no pellets can move past the deformable material 234.

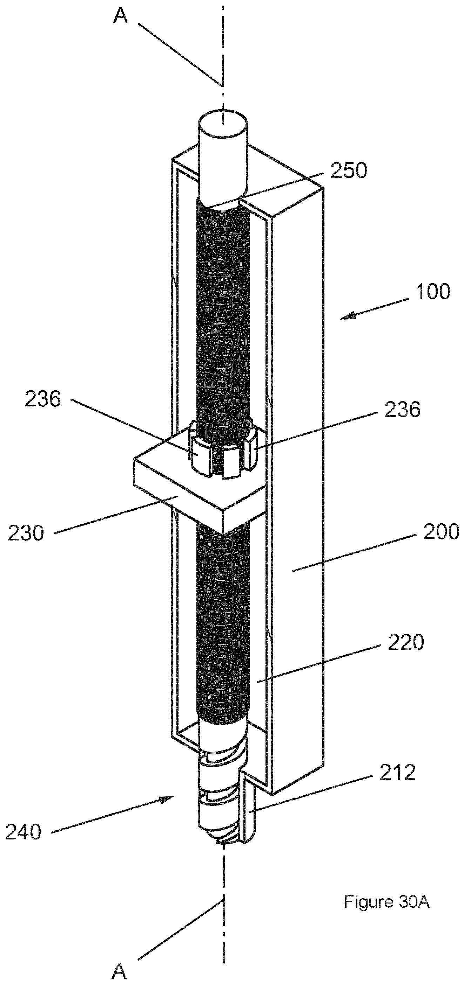

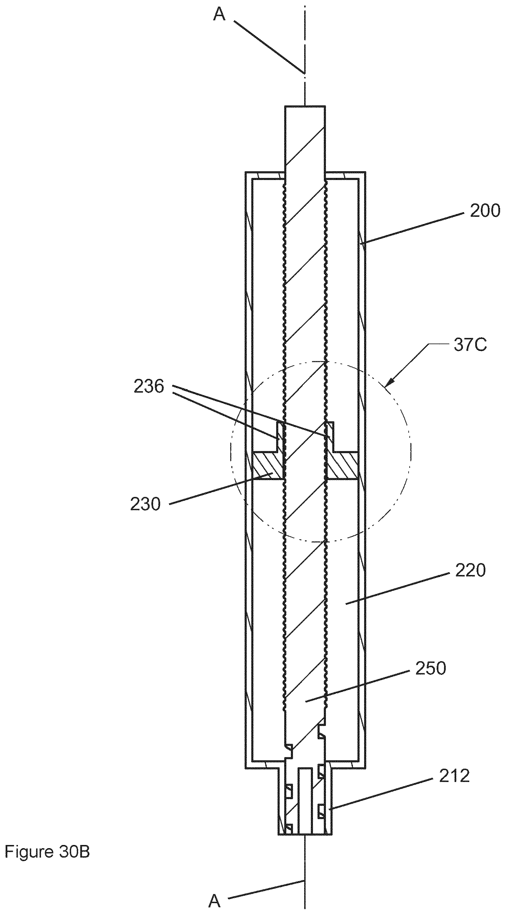

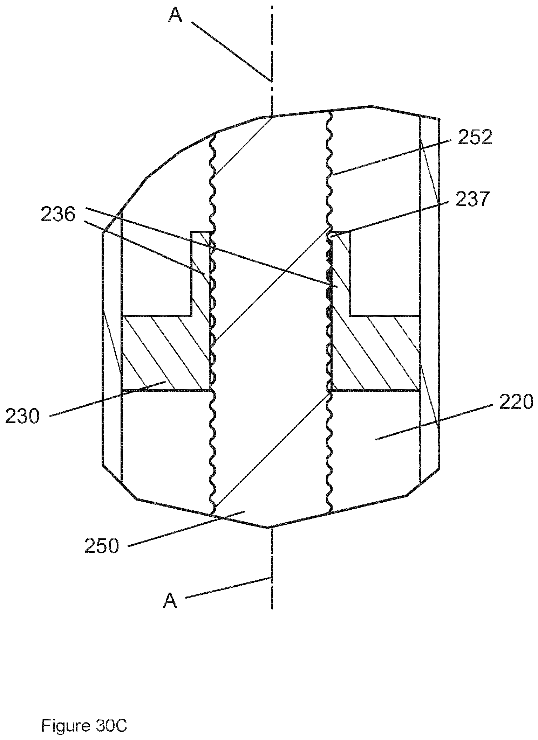

**FIGS.** 30A, 30B and 30C show an embodiment in which the plunger 230 of a device 100 is provided with a plurality of axially extending teeth or projections 236. At least some (or all) of the teeth 236 comprise a rail 237 configured to ride along the screw thread 252 of the rotating member 250. In addition, the teeth 236 are configured to flex radially such that the rails 237 on the teeth 236 can move in and out of the screw thread 252. As the rotating member 250 rotates in use, the plunger 230 will move along the axis A as a result of the engagement of the rails 237 with the screw thread 252. Once the plunger 230 contacts the pellets contained within the chamber 220 (or reaches the bottom of the chamber 220) the plunger 230 may be restricted from further axial movement. At this point, the teeth 236 are configured to flex radially outward such that the rails 237 disengage with the screw thread 252 and the rotating member 250 continues to rotate without the plunger 230 moving along the axis A. As shown in the illustrated embodiment, the rails 237 are located at an axial end of the teeth 236 furthest from the main body of the plunger 230, to maximise the ability of the teeth 236 to flex radially outward as aforesaid.

Some of the teeth 236 may be provided as stabilisers, namely without a rail 237 that engages with the screw thread 252, and these may function to stabilise the plunger 230 as it moves along the axis A and also upon flexing of the other teeth 236 that do comprise a rail 237. The teeth 236 that function to stabilise the plunger 230 may be biased radially inward, so that they cling to the rotating member 250 as the plunger 230 moves along the axis A.

Any suitable number of teeth 236 may be provided, for example between 2 and 10, and in some embodiments a single tooth 236 may be provided. In the illustrated embodiment, the plunger 230 comprises six teeth 236, with three of these teeth having rails 237 and the other three functioning as stabilisers (i.e., without teeth 236).

The plunger 230 in any of the aspects and embodiments provided herewith may comprise teeth 236 as shown and described in respect of **FIGS.** 30A-C. The teeth 236 may comprise rails 237, or alternatively may be provided as stabilisers as discussed above. In such embodiments the plunger 230 would not typically comprise its own screw thread. In other words, the plunger 230 is moved along the axis A exclusively by the engagement of the rails 237 with the screw thread 252 of the rotating member 250.

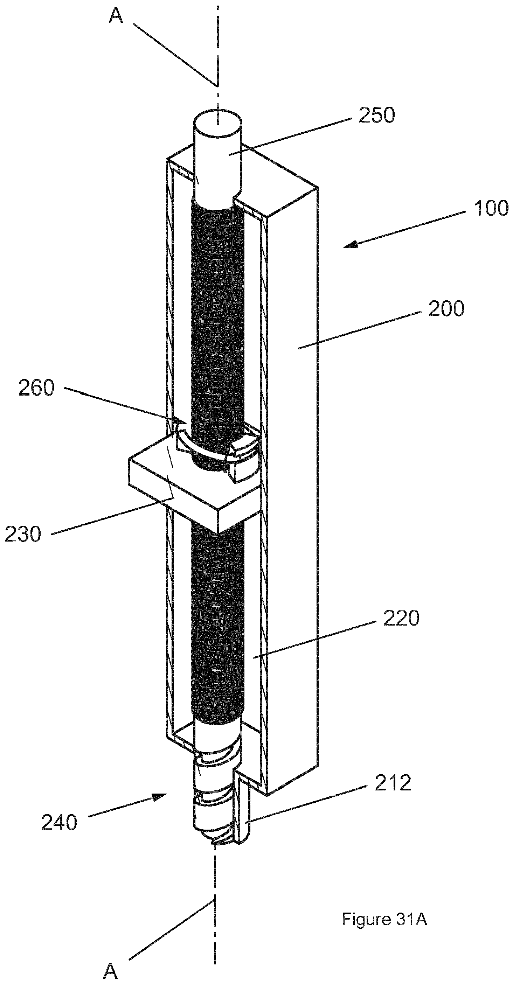

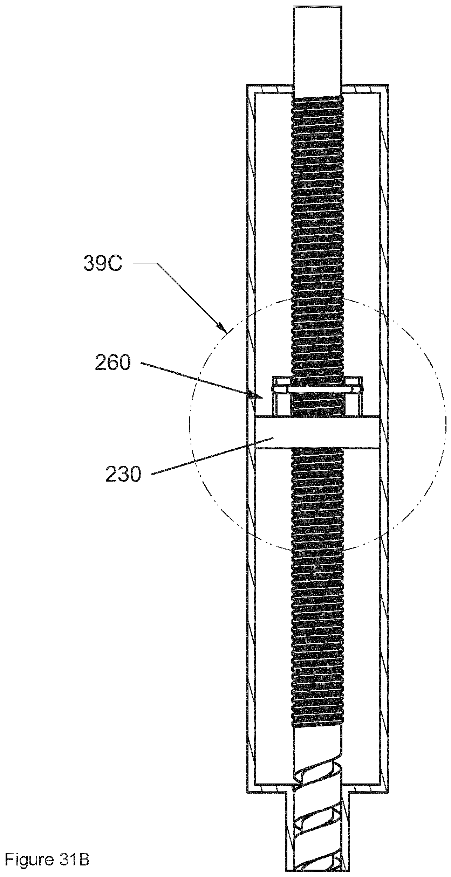

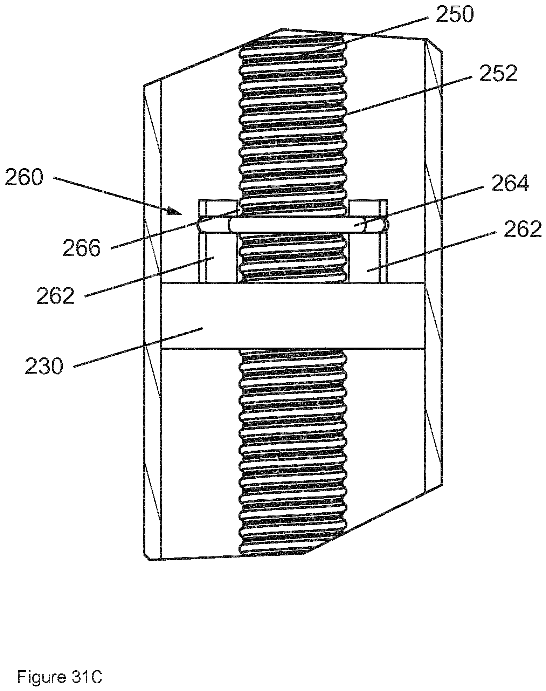

**FIGS.** 31A, 31B and 31C show an embodiment in which the plunger 230 of the device 100 includes a resilient device 260 that has a similar function to the teeth 236 described above. The resilient device 260 comprises a plurality of projections 262 (two are shown in the illustrated embodiment) and a resilient member 264 configured to bias the projections 262 radially inwards. The projections 262 extend from the main body of the plunger 230, and may be formed integrally with the main body or provided as separate pieces and secured thereto by any suitable method. The projections 262 each comprise a rail 266 configured to engage the screw thread 252 on the rotating member 250. As shown in the illustrated embodiment, the rails 266 are located at an axial end of the projections 262 furthest from the main body of the plunger 230, to maximise the ability of the projections 262 to flex radially outward as discussed below. The resilient member 264 may be, for example, an elastic band.

As the rotating member 250 rotates in use, the plunger 230 will move along the axis A as a result of the engagement of the rails 266 with the screw thread 252. The resilient member 264 ensures that the rails 266 engage with the screw thread 252 during this rotation. Once the plunger 230 contacts the pellets contained within the chamber 220 (or reaches the bottom of the chamber 220) the plunger 230 may be restricted from further axial movement. At this point, the projections 262 are configured to flex radially outward against the action of the resilient member 264, such that the rails 266 disengage with the screw thread 252 and the rotating member 250 continues to rotate without the plunger 230 moving along the axis A.

The plunger 230 in any of the aspects and embodiments provided herewith may comprise a resilient device 260 as shown and described in respect of **FIGS.** 31A-C. In such embodiments the plunger 230 would not typically comprise its own screw thread. In other words, the plunger 230 is moved along the axis A exclusively by the engagement of the rails 266 with the screw thread 252 of the rotating member 250.

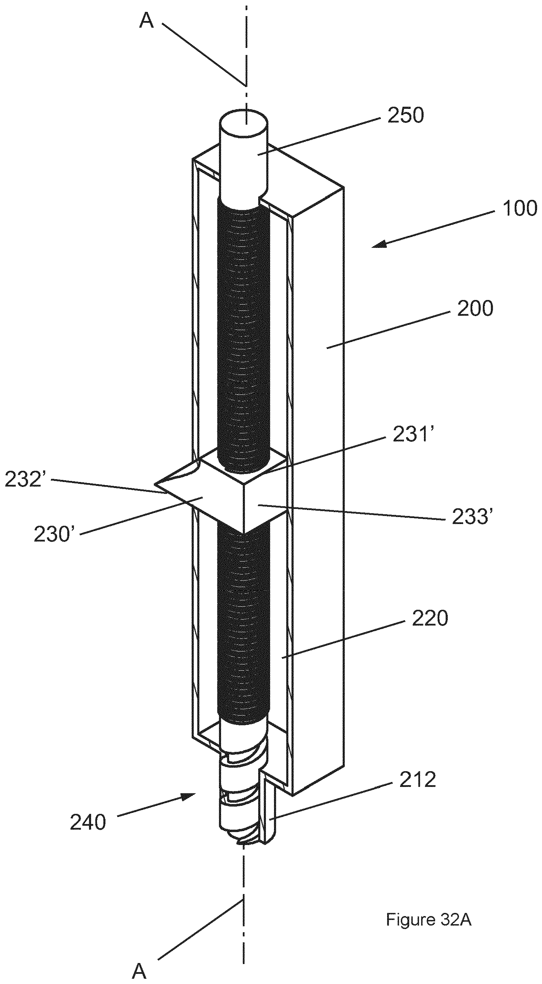

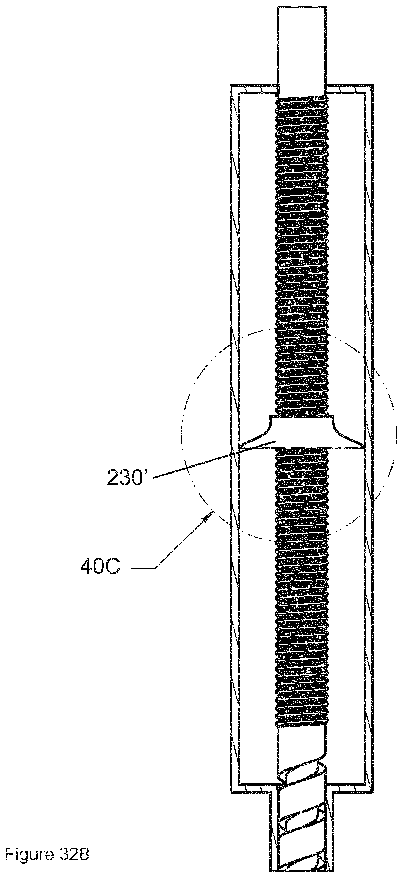

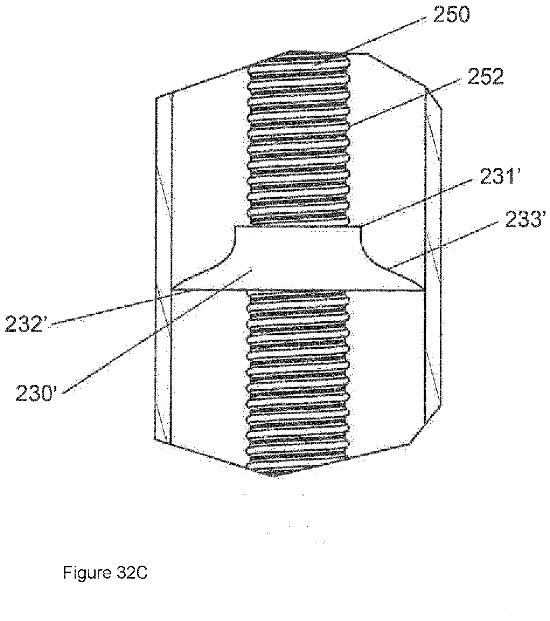

**FIGS.** 32A, 32B and 32C show an embodiment with a modified plunger 230'. In this embodiment the plunger 230' comprises a unique shape that is configured to reduce the friction between the plunger and the walls of the cartridge 200. In particular, the plunger 230' tapers from a first thickness adjacent to the screw thread 252 of the rotating member 252 a second thickness at its perimeter and adjacent to the walls of the cartridge 200, wherein the second thickness is smaller than the first thickness.

More specifically, as shown in **FIG.** 32C, the plunger 230' may comprise a substantially flat lower surface 232' that comprises the perimeter of the plunger 230' configured to contact the walls of the cartridge 200. A tapered surface 233' may be provided that extends from the perimeter and radially inwards to an upper edge 231' that is located away from the walls of the cartridge 200 and adjacent the rotating member 250.By providing a reduced thickness portion closer to the walls of the cartridge 200, friction between the plunger 230' and the cartridge 200 may be reduced. In addition, using a tapered surface 233' as shown in the illustrated embodiment means that the perimeter of the plunger 230' may flex as the plunger 230' moves axially. In such embodiments, the plunger 230' may be made from an elastomeric material, such as rubber, to enhance the ability of the plunger 230' to flex in this manner.

In various embodiments of the plunger 230' may taper to a point edge at the periphery of the plunger 230'. The thickness of the plunger 230' at the periphery may be less than, e.g., about 2 mm or even about 1 mm. The plunger 230' may be made from a thermoplastic elastomer ("TPE") or polybutylene terephthalate ("PBT"). The plunger 230' may have a hardness of less than about 100, 80, 70, 60 or even 50 shore. The shore hardness test may be conducted at shore 00 or shore A. This has been found to provide a plunger 230' that is able to flex adequately during movement along the axis A in use. The plunger 230' may be slightly oversized, in that the width of the plunger 230' (e.g., in isolation) is slightly larger than the dimensions of the cartridge 200 within which it fits. The plunger 230' may also be configured with a screw thread that is configured to cooperate with the screw thread 252 of the rotating member 250.

Generally, the apparatus and devices disclosed herein may be aimed at providing an accurate dose of medication by weight, and also providing a simple mechanism by which to administer a dosage and/or titrate a medication. Various mechanical features are provided for ease of dispensing a dosage, including swallowing a dose and providing general convenience when doing this. Various embodiments are aimed at ensuring efficient movement of the pellets through the device or apparatus as well.

The handheld apparatus 10 may combine medical knowledge with digital capabilities. The control unit may be reusable, and may be combined with various different cartridges 200 that are prefilled with a prescribed medication. For ADHD, for example, a cartridge 200 could be prefilled with the relevant medication for use over a one-month period. The cartridges 200 could be filled with pellets or granules (i.e., the oral dosage form). The pellets could be taken with liquid or soft foods supporting swallowing of the medicine. Although the apparatus have a particular use with ADHD, the technology disclosed herein is applicable to many other treatments and especially for paediatric use or for use in psychiatry, neurology, cardio-metabolic disorders or oral cancer treatments.

Example treatments that may be associated with the apparatus described herein are Attention Deficit Hyperactivity Disorder ("ADHD" - wherein the medication used in the apparatus could include amphetamines and/or methylphenidate), general pain (wherein the medication could include one or more of fentanyl, methadone, meperidine, tramadol, morphine, codeine, thebaine, oxymorphone, hydrocodone, oxycodone, hydromorphone, naltrexone, buprenorphine and methadone), immunosuppression post organ transplant (wherein the medication could include one or more of tacrolimus, sirolimus, everolimus, corticosteroids, cyclosporine, mycophenolate and azathioprine), diabetes (wherein the medication could include one or more of sitagliptin, vildagliptin, saxagliptin, linagliptin, metformin, canagliflozin, Dapagliflozin, empagliflozin and semaglutide), heart failure (wherein the medication could include one or more of carvedilol, metoprolol, bisoprolol and diurethics), Parkinson's disease ("PD" - wherein the medication could include levodopa and/or carbidopa ), epilepsy (wherein the medication could include one or more of sodium valproate. carbamazepine, lamotrigine, levetiracetam, oxcarbazepine, ethosuximide and topiramate), depression (wherein the medication could include one or more of Citalopram, bupropion, paroxetine, milnacipran, fluoxetine, duloxetine, fluvoxamine and reboxetine), schizophrenia (wherein the medication could include one or more of aripiprazole, asenapine, brexpiprazole, cariprazine, clozapine, iloperidone, lurasidone and olanzapine), cancer, animal health. For example, the apparatus 10 may be combined with medication (e.g., in pellet form) that is aimed or associated with the aforementioned treatments, for example any or all of those described above.

Use of a medication formulated as small pellets or granules can support accurate dose adjustment and help paediatrics with swallowing issues. Developments for paediatric medicines have generally included different formulations or devices which go toward solving one or two of the challenges faced with this patient population. By combining the medication with a digital capability with the handheld apparatus 10 disclosed herein, leads to improvements in dose setting, titration, ease of use, swallow-ability and compliance. The technology can be tailored to different treatment regimens for paediatric populations including combination therapy. Other areas for treatment using the apparatus 10 disclosed herein could be epilepsy and general pain alleviation. The dispensing technology could also be developed for infectious diseases, for example in children, for example the medication used with the apparatus (e.g., in pellet form) could include amoxicillin and/or penicillin.

The control unit (in any of the aspects or embodiments described herein) may include an input device or user interface, which may include one or more buttons for operating the apparatus 10, for example the dispensing mechanisms 300 therein.

The control unit may comprise a control system configured to operate the various electrical and mechanical parts of the apparatus 10, for example a user interface, display and dispensing mechanisms 300.

A prefilled cartridge 200 (e.g., for ADHD, with a one-month prescription) may have an integrated circuit board trip that communicates relevant information to the control unit. The control unit, and specifically the control system thereof, may set the dosage, prevent taking more than a maximum dosage, allow titration, and ensure notification of tampering. The control system may record dispensing of medication, for example over a defined period (e.g., the one month prescription).

The methods, method steps, or functional features disclosed herein, for example in connection with the control system of the control unit described above, may be implemented at least partially using software, e.g., computer programs. These may be located on a data processor on the control unit itself. It will thus be seen that when viewed from further aspects the present invention provides computer software specifically adapted to carry out the methods, method steps, or functional features herein described when installed on data processing means, a computer program element comprising computer software code portions for performing the methods, method steps, or functional features herein described when the program element is run on data processing means, and a computer program comprising code means adapted to perform all the steps of a methods, method steps, or functional features herein described when the program is run on a data processing system. The data processor may be a microprocessor system, a programmable FPGA (field programmable gate array), etc.

## Claims

1. A device (100) adapted to dispense a drug or medicament in pellet form, comprising:
a plurality of pellets providing an oral dosage form;
a cartridge (200) comprising a chamber (220) containing the plurality of pellets and a screw pump, wherein the screw pump is configured to receive the pellets from the chamber (220) and, upon rotation of the screw pump, transport the pellets from the chamber (220) to be dispensed from the device (100) via the screw pump; and
a rotating member (250) extending through the cartridge (200) and configured to rotate the screw pump so as to dispense the pellets therefrom,
wherein the cartridge (200) further comprises a tapered portion (207) configured to guide the pellets contained within the chamber (220) into the screw pump for dispensing from the device (100) via the screw pump as aforesaid,
wherein the screw pump is located outside of the tapered portion (207) of the cartridge (200),
wherein the screw pump comprises a screw thread, and the screw thread cooperates with an inner cylindrical surface of the cartridge to form the screw pump, such that, as the rotating member rotates in use, the screw thread rotates within the inner cylindrical surface, causing pellets contained within the chamber to enter the screw thread, and travel down the screw thread for dispensing from the screw pump,
wherein the cartridge (200) comprises an exit tube (212) that extends from the tapered portion (207) of the cartridge (200), and the exit tube (212) contains the screw pump, wherein the screw pump is displaced from a confluence of the tapered portion (207) and the exit tube (212),
wherein the inner cylindrical surface of the exit tube forms the inner cylindrical surface of the cartridge which cooperates with the screw thread.

2. A device as claimed in claim 1, wherein the tapered portion (207) extends a distance (d) in a first direction, wherein the screw pump is displaced from the confluence of the tapered portion (207) and the exit tube (212) in the first direction by at least 50% of the distance (d).

3. A device as claimed in any preceding claim, wherein a largest dimension of the pellets is between about 150 µm and 1200 µm.

4. A device as claimed in any preceding claim, wherein the cartridge (200) extends from a first end to a second, dispensing end, and the screw pump is located at the second, dispensing end of the cartridge (200).

5. A device as claimed in any preceding claim, wherein the device (100) is a hand-held device (100).

6. A device as claimed in any preceding claim, wherein the rotating member (250) comprises one or more fins (290) located at an entrance to the screw pump and configured to collect and direct pellets into the screw pump.

7. A device as claimed in claim 6, wherein each of the one or more fins (290) are aligned and associated with a respective screw start of the screw pump.

8. A device as claimed in any preceding claim, wherein the rotating member (250) comprises one or more baffles (390) configured to rotate with the rotating member (250) and assist in moving pellets through the chamber (220) and into the tapered portion (207).

9. A device as claimed in any preceding claim, wherein the screw thread has a variable pitch.

10. A device as claimed in any preceding claim, wherein the screw pump comprises one or more screw threads formed around the rotating member, such that the screw pump forms part of the rotating member.

11. A device as claimed in any preceding claim, wherein an internal wall of the cartridge (200) forming at least the tapered portion (207) tapers from a first diameter (D1) to a second diameter (D2), wherein the first diameter (D1) is larger than the second diameter (D2), and wherein the internal wall has the first diameter (D1) in a portion of the cartridge (200) above the tapered portion (207), and the internal wall tapers from the first diameter (D1) to the second diameter (D2) as it extends through the tapered portion (207).

12. A method of using a device as claimed in any preceding claim, comprising:
rotating the screw pump, e.g., using the rotating member (250) to cause pellets to be dispensed from the device (100).

13. A method as claimed in claim 12, further comprising:
filling the chamber (220) with the pellets;
determining an amount of rotation of the screw pump that will cause a predetermined amount of the pellets to be dispensed from the device (100); and
rotating the screw pump by the predetermined amount to cause the predetermined amount of pellets to be dispensed from the device (100).

## Patentansprüche

1. Vorrichtung (100), die dazu ausgelegt ist, ein Arzneimittel oder Medikament in Pillenform abzugeben, umfassend:
eine Vielzahl von Pillen, die eine orale Darreichungsform bereitstellen;
eine Kartusche (200), die eine Kammer (220) umfasst, die die Vielzahl von Pillen und eine Schraubenpumpe enthält, wobei die Schraubenpumpe dazu konfiguriert ist, die Pillen aus der Kammer (220) aufzunehmen und bei Drehung der Schraubenpumpe die Pillen aus der Kammer (220) zu transportieren, um sie über die Schraubenpumpe aus der Vorrichtung (100) abzugeben; und
ein Drehelement (250), das sich durch die Kartusche (200) erstreckt und dazu konfiguriert ist, die Schraubenpumpe zu drehen, um Pillen daraus abzugeben,
wobei die Kartusche (200) weiter einen konischen Abschnitt (207) umfasst, der dazu konfiguriert ist, die in der Kammer (220) enthaltenen Pillen in die Schraubenpumpe zu leiten, um sie wie oben beschrieben über die Schraubenpumpe aus der Vorrichtung (100) auszugeben,
wobei sich die Schraubenpumpe außerhalb des konischen Abschnitts (207) der Kartusche (200) befindet,
wobei die Schraubenpumpe ein Schraubengewinde umfasst, und das Schraubengewinde mit einer inneren zylindrischen Oberfläche der Kartusche zusammenwirkt, um die Schraubenpumpe zu bilden, sodass, wenn sich das Drehelement in Verwendung dreht, sich das Schraubengewinde innerhalb der inneren zylindrischen Oberfläche dreht, was in der Kammer enthaltene Pillen veranlasst, in das Schraubengewinde einzutreten und das Schraubengewinde hinunterzuwandern, um aus der Schraubenpumpe ausgegeben zu werden,
wobei die Kartusche (200) ein Ausgangsrohr (212) umfasst, das sich von dem konischen Abschnitt (207) der Kartusche (200) erstreckt, und das Ausgangsrohr (212) die Schraubenpumpe enthält, wobei die Schraubenpumpe von einem Zusammentreffen des konischen Abschnitts (207) und des Ausgangsrohrs (212) versetzt ist,
wobei die innere zylindrische Oberfläche des Ausgangsrohrs die innere zylindrische Oberfläche der Kartusche bildet, die mit dem Schraubengewinde zusammenwirkt.

2. Vorrichtung nach Anspruch 1, wobei sich der konische Abschnitt (207) über eine Distanz (d) in einer ersten Richtung erstreckt, wobei die Schraubenpumpe von dem Zusammentreffen des konischen Abschnitts (207) und des Ausgangsrohrs (212) in der ersten Richtung um mindestens 50% der Distanz (d) versetzt ist.

3. Vorrichtung nach einem vorstehenden Anspruch, wobei eine größte Abmessung der Pillen zwischen etwa 150 µm und 1200 µm beträgt.

4. Vorrichtung nach einem vorstehenden Anspruch, wobei sich die Kartusche (200) von einem ersten Ende zu einem zweiten, Abgabeende, erstreckt und die Schraubenpumpe sich am zweiten, dem Abgabeende der Kartusche (200) befindet.

5. Vorrichtung nach einem vorstehenden Anspruch, wobei die Vorrichtung (100) eine handgehaltene Vorrichtung (100) ist.

6. Vorrichtung nach einem vorstehenden Anspruch, wobei das Drehelement (250) eine oder mehrere Rippen (290) umfasst, die sich an einem Eingang der Schraubenpumpe befinden und dazu konfiguriert sind, Pillen aufzusammeln und in die Schraubenpumpe zu leiten.

7. Vorrichtung nach Anspruch 6, wobei jede der einen oder mehreren Rippen (290) mit einem jeweiligen Schraubenanfang der Schraubenpumpe ausgerichtet und verknüpft ist.

8. Vorrichtung nach einem vorstehenden Anspruch, wobei das Drehelement (250) ein oder mehrere Leitbleche (390) umfasst, die dazu konfiguriert sind, sich mit dem Drehelement (250) zu drehen und dabei zu helfen, die Pillen durch die Kammer (220) und in den konischen Abschnitt (207) zu bewegen.

9. Vorrichtung nach einem vorstehenden Anspruch, wobei das Schraubengewinde eine variable Steigung aufweist.

10. Vorrichtung nach einem vorstehenden Anspruch, wobei die Schraubenpumpe ein oder mehrere Schraubengewinde umfasst, die um das Drehelement herum gebildet sind, sodass die Schraubenpumpe einen Teil des Drehelements bildet.

11. Vorrichtung nach einem vorstehenden Anspruch, wobei eine Innenwand der Kartusche (200), die mindestens den konischen Abschnitt (207) bildet, sich von einem ersten Durchmesser (D1) auf einen zweiten Durchmesser (D2) verjüngt, wobei der erste Durchmesser (D1) größer als der zweite Durchmesser (D2) ist, und wobei die Innenwand in einem Abschnitt der Kartusche (200) über dem konischen Abschnitt (207) den ersten Durchmesser (D1) aufweist, und sich die Innenwand in ihrem Verlauf durch den konischen Abschnitt (207) von dem ersten Durchmesser (D1) auf den zweiten Durchmesser (D2) verjüngt.

12. Verfahren zum Verwenden einer Vorrichtung nach einem vorstehenden Anspruch, umfassend:
Drehen der Schraubenpumpe, z. B. unter Verwendung des Drehelements (250), um Pillen zu veranlassen, aus der Vorrichtung (100) abgegeben zu werden.

13. Verfahren nach Anspruch 12, weiter umfassend:
Füllen der Kammer (220) mit den Pillen;
Bestimmen eines Betrags einer Drehung der Schraubenpumpe, der eine vorbestimmte Menge der Pillen veranlassen wird, aus der Vorrichtung (100) abgegeben zu werden; und
Drehen der Schraubenpumpe um den vorgegebenen Betrag, um die vorbestimmte Menge an Pillen zu veranlassen, aus der Vorrichtung (100) abgegeben zu werden.

## Revendications

1. Dispositif (100) conçu pour distribuer un médicament sous forme de comprimés, comprenant :
une pluralité de comprimés fournissant une forme posologique orale ;
une cartouche (200) comprenant une chambre (220) contenant la pluralité de comprimés et une pompe à vis, dans lequel la pompe à vis est configurée pour recevoir les comprimés de la chambre (220) et, lors de la rotation de la pompe à vis, transporter les comprimés de la chambre (220) à distribuer par le dispositif (100) par l'intermédiaire de la pompe à vis ; et
un élément rotatif (250) s'étendant à travers la cartouche (200) et configuré pour faire tourner la pompe à vis de manière à distribuer les comprimés depuis celle-ci,
dans lequel la cartouche (200) comprend en outre une partie conique (207) configurée pour guider les comprimés contenus dans la chambre (220) jusque dans la pompe à vis pour distribution par le dispositif (100) par l'intermédiaire de la pompe à vis comme mentionné ci-dessus,
dans lequel la pompe à vis est située à l'extérieur de la partie conique (207) de la cartouche (200),
dans lequel la pompe à vis comprend un filetage, et le filetage coopère avec une surface cylindrique interne de la cartouche pour former la pompe à vis, de telle sorte que, lorsque l'élément rotatif tourne lors de l'utilisation, le filetage tourne à l'intérieur de la surface cylindrique interne, ce qui amène les comprimés contenus dans la chambre à pénétrer dans le filetage et à descendre dans le filetage pour distribution par la pompe à vis,
dans lequel la cartouche (200) comprend un tube de sortie (212) qui s'étend à partir de la partie conique (207) de la cartouche (200), et le tube de sortie (212) contient la pompe à vis, dans lequel la pompe à vis est déplacée à partir d'une confluence de la partie conique (207) et du tube de sortie (212),
dans lequel la surface cylindrique interne du tube de sortie forme la surface cylindrique interne de la cartouche qui coopère avec le filetage.

2. Dispositif selon la revendication 1, dans lequel la partie conique (207) s'étend sur une distance (d) dans une première direction, dans lequel la pompe à vis est déplacée de la confluence de la partie conique (207) et du tube de sortie (212) dans la première direction d'au moins 50 % de la distance (d).

3. Dispositif selon une quelconque revendication précédente, dans lequel la plus grande dimension des comprimés est comprise entre environ 150 µm et 1200 µm.

4. Dispositif selon une quelconque revendication précédente, dans lequel la cartouche (200) s'étend d'une première extrémité à une seconde extrémité de distribution, et la pompe à vis est située à la seconde extrémité de distribution de la cartouche (200).

5. Dispositif selon une quelconque revendication précédente, dans lequel le dispositif (100) est un dispositif portatif (100).

6. Dispositif selon une quelconque revendication précédente, dans lequel l'élément rotatif (250) comprend une ou plusieurs ailettes (290) situées à une entrée de la pompe à vis et configurées pour collecter et diriger des comprimés dans la pompe à vis.

7. Dispositif selon la revendication 6, dans lequel chacune des une ou plusieurs ailettes (290) est alignée sur et associée à un départ de vis respectif de la pompe à vis.

8. Dispositif selon une quelconque revendication précédente, dans lequel l'élément rotatif (250) comprend un ou plusieurs déflecteurs (390) configurés pour tourner avec l'élément rotatif (250) et aider à déplacer les comprimés à travers la chambre (220) et dans la partie conique (207).

9. Dispositif selon une quelconque revendication précédente, dans lequel le filetage présente un pas variable.

10. Dispositif selon une quelconque revendication précédente, dans lequel la pompe à vis comprend un ou plusieurs filetages formés autour de l'élément rotatif, de telle sorte que la pompe à vis fasse partie de l'élément rotatif.

11. Dispositif selon une quelconque revendication précédente, dans lequel une paroi interne de la cartouche (200) formant au moins la partie conique (207) se rétrécit d'un premier diamètre (D1) à un second diamètre (D2), dans lequel le premier diamètre (D1) est plus grand que le second diamètre (D2), et dans lequel la paroi interne présente le premier diamètre (D1) dans une partie de la cartouche (200) au-dessus de la partie conique (207), et la paroi interne se rétrécit du premier diamètre (D1) au second diamètre (D2) à mesure qu'elle s'étend à travers la partie conique (207).

12. Procédé d'utilisation d'un dispositif selon une quelconque revendication précédente, comprenant :
l'entraînement en rotation de la pompe à vis, par exemple à l'aide de l'élément rotatif (250), pour amener des comprimés à être distribués par le dispositif (100).

13. Procédé selon la revendication 12, comprenant en outre :
le remplissage de la chambre (220) avec les comprimés ;
la détermination d'une quantité de rotation de la pompe à vis qui entraînera la distribution d'une quantité prédéterminée de comprimés par le dispositif (100) ; et
l'entraînement en rotation de la pompe à vis de la quantité prédéterminée pour provoquer la distribution de la quantité prédéterminée de comprimés par le dispositif (100).
